# EUROPEAN PATENT SPECIFICATION

(11) **EP 2 937 924 B1**
(45) Date of publication and mention of the grant of the patent: **07.02.2018**
(21) Application number: 13866462.8
(22) Date of filing: 18.12.2013
(51) Int. Cl.: H01M 8/0612, H01M 8/0662, H01M 8/04089, H01M 8/0438, H01M 8/04746, C01B 3/38, H01M 8/1018, H01M 8/04223

(54) **FUEL CELL SYSTEM AND METHOD OF OPERATING FUEL CELL SYSTEM**
BRENNSTOFFZELLENSYSTEM UND VERFAHREN ZUM BETREIBEN DES BRENNSTOFFZELLENSYSTEMS
SYSTÈME DE PILE À COMBUSTIBLE ET PROCÉDÉ DE FONCTIONNEMENT D'UN SYSTÈME DE PILE À COMBUSTIBLE

(30) Priority: 19.12.2012 JP 2012276490
(43) Date of publication of application: 28.10.2015
(73) Proprietor: Panasonic Intellectual Property Management Co., Ltd., Osaka-shi, Osaka 540-6207 (JP)
(72) Inventor: TATSUI, Hiroshi, Osaka 540-6207 (JP); TAMURA, Yoshio, Osaka 540-6207 (JP); YUKIMASA, Akinori, Osaka 540-6207 (JP); NAKAMURA, Akinari, Osaka 540-6207 (JP)
(74) Representative: Grünecker Patent- und Rechtsanwälte PartG mbB
(86) International application number: PCT/JP2013/007434
(87) International publication number: WO 2014/097622

(56) References cited:
- EP-A1- 2 769 958
- WO-A1-2012/164897
- WO-A1-2013/057891
- JP-A- H1 092 452
- JP-A- H06 342 669
- JP-A- 2011 113 831
- JP-A- 2011 195 391
- JP-A- 2012 201 514
- JP-A- 2013 212 961
- US-A- 4 098 960

## Description

### Technical Field

The present invention relates to a fuel cell system including a hydro-desulfurizer configured to remove a sulfur compound in a material gas and a method of operating the fuel cell system.

### Background Art

A fuel cell system including a hydrogen generator and a fuel cell is conventionally known. In such a fuel cell system, the hydrogen generator generates a fuel gas from a material gas by using steam in the presence of a reforming catalyst. Then, the fuel cell causes an electrochemical reaction between the fuel gas and an oxidizing gas to generate electric power. The material gas used to generate the fuel gas contains a sulfur compound as an odorant or impurity. Since the sulfur compound poisons the reforming catalyst, the sulfur compound needs to be removed from the material gas.

A hydro-desulfurizer is used to remove the sulfur compound. The hydro-desulfurizer causes the sulfur compound in the material gas to react with hydrogen to remove the sulfur compound. A large amount of hydrogen is contained in the fuel gas. Therefore, according to a small fuel cell system, such as a home fuel cell system, a recycled gas channel branches from a channel through which the fuel gas is supplied to the fuel cell, and a part of the fuel gas is supplied through the recycled gas channel to the hydro-desulfurizer.

Since the flow rate in the recycled gas channel is low, an inner diameter of the recycled gas channel is small. In addition, the recycled gas channel is provided with an orifice or the like for adjusting the flow rate and therefore includes a further thinner portion. A problem is that such a thin recycled gas channel is easily clogged by condensed water of steam contained in the fuel gas.

As one means for solving this problem, for example, a fuel reforming system is proposed in PTL 1. In the fuel reforming system, a steam condensing separator is provided between a reforming reactor and a CO selective oxidation reactor. An upstream end of a recycle line is connected to the steam condensing separator, and a downstream end thereof is connected to an upstream side of the reforming reactor.
EP 2 769 958 A and WO 2012/164897 A1 relate to a hydrogen generation apparatus, a method for operating the hydrogen generation apparatus and a fuel cell system. US 4 098 960 A relates to fuel cell fuel control system.

### Citation List

### Patent Literature

PTL 1: Japanese Patent No. 4493257

### Summary of Invention

### Technical Problem

According to the fuel cell system of PTL 1, the steam contained in a recycled gas that is a part of the fuel gas is condensed and separated by the steam condensing separator. The steam contained in the recycled gas is saturated by the temperature of the gas in the steam condensing separator. Therefore, in a case where the temperature of the recycled gas further decreases in the recycle line provided downstream of the steam condensing separator, the steam in the recycled gas may condense, and the recycle line may be clogged by the condensed water.

The present invention was made to solve the above problem, and an object of the present invention is to provide a fuel cell system and a method of operating the fuel cell system, each of which is capable of reducing harmful effects caused by clogging of a recycled gas channel.

### Solution to Problem

A fuel cell system according to the present invention is defined in claim 1. A method of operating a fuel cell system according to the present invention is defined in claim 18. Further advantageous embodiments are defined in the dependent claims.

### Advantageous Effects of Invention

The present invention includes the above-explained configuration and has an effect of being able to provide a fuel cell system and a fuel cell system operating method, each of which is capable of reducing harmful effects caused by clogging of a recycled gas channel.

The above object, other objects, features, and advantages of the present invention will be made clear by the following detailed explanation of preferred embodiments with reference to the attached drawings.

### Brief Description of Drawings

Fig. 1 is a block diagram showing the configuration of a fuel cell system according to Embodiment 1.
Fig. 2 is a flow chart showing a method of operating the fuel cell system of Fig. 1.
Fig. 3 is a flow chart showing the method of operating the fuel cell system according to Modification Example 4.
Fig. 4 is a flow chart showing the method of operating the fuel cell system according to Modification Example 5.
Fig. 5 is a block diagram showing the configuration of the fuel cell system according to Embodiment 2.
Fig. 6 is a block diagram showing the configuration of the fuel cell system according to Modification Example 8.
Fig. 7 is a flow chart showing the method of operating the fuel cell system according to Modification Example 8.
Fig. 8 is a flow chart showing the method of operating the fuel cell system according to Modification Example 9.
Fig. 9 is a block diagram showing the configuration of the fuel cell system according to Embodiment 3.
Fig. 10 is a flow chart showing the method of operating the fuel cell system of Fig.
Fig. 11 is a flow chart showing the method of operating the fuel cell system according to Modification Example 10.
Fig. 12 is a block diagram showing the configuration of the fuel cell system according to Embodiment 4 of the present invention.
Fig. 13 is a flow chart showing the method of operating the fuel cell system of Fig. 12.
Fig. 14 is a flow chart showing the method of operating the fuel cell system according to Modification Example 11.
Fig. 15 is a flow chart showing the method of operating the fuel cell system according to Modification Example 12.
Fig. 16 is a flow chart showing the method of operating the fuel cell system according to Modification Example 13.

### Description of Embodiments

A fuel cell system according to a first aspect of the present invention includes: a hydro-desulfurizer configured to cause a sulfur compound in a material gas to react with hydrogen to remove the sulfur compound; a material supply unit configured to boost the material gas to supply the material gas to the hydro-desulfurizer; a hydrogen generator configured to cause a reaction between the material gas having flowed through the hydro-desulfurizer and steam to generate a hydrogen-containing fuel gas; a fuel cell configured to generate electric power using the fuel gas discharged from the hydrogen generator and an oxidizing gas; a fuel gas channel through which the fuel gas discharged from the hydrogen generator is supplied to the fuel cell; a recycled gas channel which branches from a branching portion of the fuel gas channel and by which a part of the fuel gas discharged from the hydrogen generator is mixed with the material gas before the material gas flows into the material supply unit; an off fuel gas channel through which a hydrogen-containing off fuel gas unconsumed by the fuel cell is discharged from the fuel cell; a first on-off valve disposed at at least one of the fuel gas channel provided downstream of the branching portion and the off fuel gas channel; and a controller, wherein the controller is configured to close the first on-off valve and activate the material supply unit when a predetermined condition is satisfied.

The fuel cell system according to a second aspect of the present invention may be configured such that the fuel cell system according to the first aspect of the present invention further includes a material gas channel through which the material gas is supplied to the hydrogen generator and a pressure relief valve disposed at any of: the material gas channel; a portion, provided upstream of the first on-off valve, of the fuel gas channel; a portion, provided upstream of the first on-off valve, of the off fuel gas channel; and the recycled gas channel and configured to open when pressure in the channel at which the pressure relief valve is disposed exceeds first predetermined pressure.

The fuel cell system according to a third aspect of the present invention may be configured such that in the first aspect of the present invention, the first on-off valve is configured to open when pressure in a portion, provided upstream of the first on-off valve, of the channel at which the first on-off valve is disposed exceeds first predetermined pressure.

The fuel cell system according to a fourth aspect of the present invention may be configured such that in the third aspect of the present invention, the first on-off valve is configured to close when the pressure in the portion, provided upstream of the first on-off valve, of the channel at which the first on-off valve is disposed becomes lower than second predetermined pressure not higher than the first predetermined pressure after the first on-off valve is opened when the pressure in the portion, provided upstream of the first on-off valve, of the channel at which the first on-off valve is disposed exceeds the first predetermined pressure.

The fuel cell system according to a fifth aspect of the present invention may be configured such that the fuel cell system according to the first aspect of the present invention further includes a pressure detector configured to detect pressure in a portion, provided upstream of the first on-off valve, of the channel at which the first on-off valve is disposed, wherein the controller is configured to open the first on-off valve when the pressure detected by the pressure detector exceeds first predetermined pressure.

When "the pressure detected by the pressure detector exceeds first predetermined pressure", the determination of this pressure is performed by the pressure detector or the controller. To be specific, the pressure detector detects the pressure and determines whether or not the detected pressure has reached the first predetermined pressure. When the detected pressure has reached the first predetermined pressure, the pressure detector may output the determination result to the controller. Or, the pressure detector detects the pressure and outputs the detected pressure to the controller, and the controller may determine whether or not the detected pressure has reached the first predetermined pressure.

The fuel cell system according to a sixth aspect of the present invention may be configured such that in the fifth aspect of the present invention, the controller is configured to close the first on-off valve when the pressure detected by the pressure detector becomes lower than second predetermined pressure not higher than the first predetermined pressure after the first on-off valve is opened when the pressure detected by the pressure detector exceeds the first predetermined pressure. When "the detected pressure becomes lower than second predetermined pressure not higher than the first predetermined pressure", the determination of this pressure is performed by the pressure detector or the controller.

The fuel cell system according to a seventh aspect of the present invention may be configured such that in any one of the first to sixth aspects of the present invention, the controller is configured to close the first on-off valve and activate the material supply unit during an electric power generating operation of the fuel cell system.

The fuel cell system according to an eighth aspect of the present invention may be configured such that in any one of the first to sixth aspects of the present invention, the controller is configured to close the first on-off valve and activate the material supply unit during a stop operation of the fuel cell system.

The fuel cell system according to a ninth aspect of the present invention may be configured such that in any one of the first to eighth aspects of the present invention, the controller is configured to close the first on-off valve and activate the material supply unit for every predetermined time.

The fuel cell system according to a tenth aspect of the present invention may be configured such that in any one of the first to ninth aspects of the present invention, the first on-off valve is disposed at the off fuel gas channel.

The fuel cell system according to an eleventh aspect of the present invention may be configured such that the fuel cell system according to any one of the first to tenth aspects of the present invention further includes an electric power adjusting portion configured to adjust output electric power from the fuel cell, wherein: the first on-off valve is disposed at the off fuel gas channel; and the controller is configured to reduce the output electric power of the electric power adjusting portion when the first on-off valve is closed during the electric power generating operation of the fuel cell system.

The fuel cell system according to a twelfth aspect of the present invention may be configured such that the fuel cell system according to any one of the first to tenth aspects of the present invention further includes an electric power adjusting portion configured to adjust output electric power from the fuel cell, wherein: the first on-off valve is disposed at the off fuel gas channel; and the controller is configured to increase the output electric power of the electric power adjusting portion when the first on-off valve is closed during the electric power generating operation of the fuel cell system.

The fuel cell system according to a thirteenth aspect of the present invention may be configured such that in any one of the first to twelfth aspects of the present invention, the controller is configured to open the first on-off valve after a first predetermined time from the closure of the first on-off valve.

The fuel cell system according to a fourteenth aspect of the present invention may be configured such that in any one of the first to thirteenth aspects of the present invention, the controller is configured to repeat, a predetermined number of times, the closure of the first on-off valve and the opening of the first on-off valve after a second predetermined time from the closure.

The fuel cell system according to a fifteenth aspect of the present invention is configured such that the fuel cell system according to any one of the first to fourteenth aspect of the present invention further includes a clogging detector configured to detect clogging of the recycled gas channel, wherein the controller is configured to close the first on-off valve and activate the material supply unit when the clogging detector detects the clogging.

When "the clogging detector detects the clogging", the determination of this clogging is performed by the clogging detector or the controller. To be specific, the clogging detector may detect a physical value, determine the clogging based on the physical value, and output the determination result to the controller. Or, the clogging detector may detect the physical value and output the physical value to the controller, and the controller may determine the clogging based on the physical value.

The physical value detected by the clogging detector may be a value which changes between when the recycled gas channel is in a clogged state and when it is not in the clogged state. According to the invention, examples of the physical value include pressure, a temperature, and a flow rate.

The fuel cell system according to a sixteenth aspect of the present invention may be configured such that in the fifteenth aspect of the present invention, the controller is configured to start the stop operation of the fuel cell system, then close the first on-off valve, and activate the material supply unit when the clogging detector detects the clogging during the electric power generating operation of the fuel cell system.

The fuel cell system according to a seventeenth aspect of the present invention may be configured such that in the fifteenth or sixteenth aspect, the controller is configured to open the first on-off valve when the clogging detector does not detect the clogging after the first on-off valve is closed when the clogging detector detects the clogging.

The fuel cell system according to an eighteenth aspect of the present invention may be configured such that in any one of the fifteenth to seventeenth aspects of the present invention, the controller is configured to, when the clogging detector detects the clogging, repeat the closure of the first on-off valve and the opening of the first on-off valve after a third predetermined time from the closure until the clogging detector does not detect the clogging.

A method of operating a fuel cell system according to a nineteenth aspect of the present invention is a method of operating a fuel cell system, the fuel cell system including: a hydro-desulfurizer configured to cause a sulfur compound in a material gas to react with hydrogen to remove the sulfur compound; a material supply unit configured to boost the material gas to supply the material gas to the hydro-desulfurizer; a hydrogen generator configured to cause a reaction between the material gas having flowed through the hydro-desulfurizer and steam to generate a hydrogen-containing fuel gas; a fuel cell configured to generate electric power using the fuel gas discharged from the hydrogen generator and an oxidizing gas; a fuel gas channel through which the fuel gas discharged from the hydrogen generator is supplied to the fuel cell; a recycled gas channel which branches from a branching portion of the fuel gas channel and by which a part of the fuel gas discharged from the hydrogen generator is mixed with the material gas before the material gas flows into the material supply unit; an off fuel gas channel through which a hydrogen-containing off fuel gas unconsumed by the fuel cell is discharged from the fuel cell; and a first on-off valve disposed at at least one of the fuel gas channel provided downstream of the branching portion and the off fuel gas channel, the method including closing the first on-off valve and activating the material supply unit when a predetermined condition is satisfied.

This fuel cell system operating method includes a first step of, when the predetermined condition is satisfied, closing the first on-off valve and activating the material supply unit. By the first step, the harmful effects caused by the clogging of the recycled gas channel can be reduced.

The fuel cell system operating method may be such that in the first step, during the electric power generating operation of the fuel cell system, the first on-off valve is closed, and the material supply unit is activated.

The fuel cell system operating method may be such that in the first step, during the stop operation of the fuel cell system, the first on-off valve is closed, and the material supply unit is activated.

The fuel cell system operating method may be such that in the first step, for every predetermined time interval, the first on-off valve is closed, and the material supply unit is activated.

The fuel cell system operating method may be the method of operating the fuel cell system including a pressure detector configured to detect pressure of a portion, provided upstream of the first on-off valve, of a channel at which the first on-off valve is disposed, and include, after the first step, a second step of opening the first on-off valve when the pressure detected by the pressure detector exceeds the first predetermined pressure.

The fuel cell system operating method may include, after the second step, a third step of closing the first on-off valve when the detected pressure becomes lower than second predetermined pressure not higher than the first predetermined pressure after the first on-off valve is opened when the detected pressure exceeds the first predetermined pressure.

The fuel cell system operating method may be the method of operating the fuel cell system further including an electric power adjusting portion configured to adjust output electric power from the fuel cell, the first on-off valve being disposed at the off fuel gas channel, wherein in the first step, when the first on-off valve is closed during the electric power generating operation of the fuel cell system, the output electric power of the electric power adjusting portion is reduced.

The fuel cell system operating method may be the method of operating the fuel cell system further including an electric power adjusting portion configured to adjust output electric power from the fuel cell, the first on-off valve being disposed at the off fuel gas channel, wherein in the first step, when the first on-off valve is closed during the electric power generating operation of the fuel cell system, the output electric power of the electric power adjusting portion is increased.

The fuel cell system operating method may include, after the first step, a fourth step of opening the first on-off valve after a first predetermined time from the closure of the first on-off valve.

The fuel cell system operating method may include, after the first step, a fifth step of repeating, a predetermined number of times, the closure of the first on-off valve and the opening of the first on-off valve after a second predetermined time from the closure.

The fuel cell system operating method of the invention is the method of operating the fuel cell system further including a clogging detector configured to detect clogging of the recycled gas channel, wherein in the first step, when the clogging detector detects the clogging, the first on-off valve is closed, and the material supply unit is activated.

The fuel cell system operating method may be such that in the first step, when the clogging detector detects the clogging during the electric power generating operation of the fuel cell system, the stop operation of the fuel cell system is started, the first on-off valve is then closed, and the material supply unit is activated.

The fuel cell system operating method may include, after the first step, a sixth step of opening the first on-off valve when the clogging detector does not detect the clogging.

The fuel cell system operating method may include, after the first step, a seventh step of repeating an operation of opening the first on-off valve after a third predetermined time from the closure of the first on-off valve, until the clogging detector does not detect the clogging.

### Embodiment 1

### Configuration of Fuel Cell System

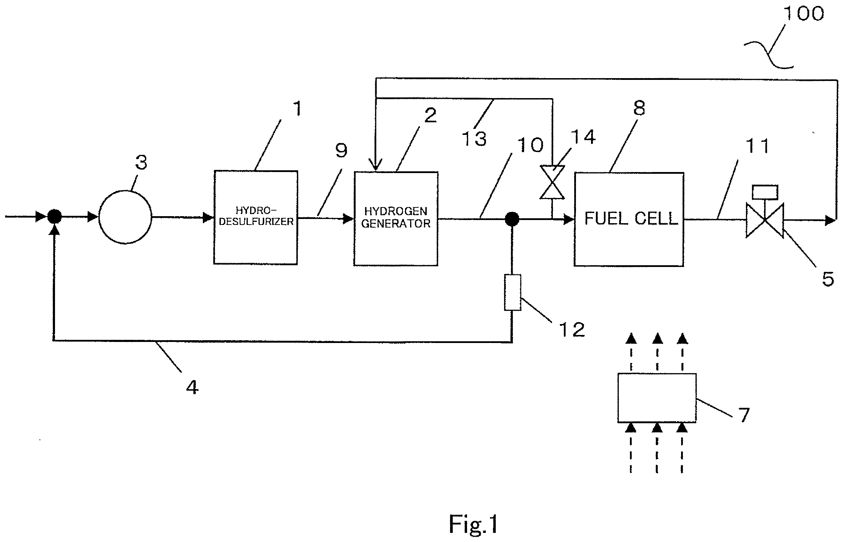

Fig. 1 is a block diagram showing the configuration of a fuel cell system 100 according to Embodiment 1. As shown in Fig. 1, the fuel cell system 100 is a system configured to generate a fuel gas from a material gas and generates electric power using the fuel gas. The fuel cell system 100 mainly includes a hydro-desulfurizer 1, a hydrogen generator 2, a material supply unit 3, a recycled gas channel 4, a first on-off valve 5, a controller 7, a fuel cell 8, a fuel gas channel 10, and an off fuel gas channel 11. The fuel cell system 100 may further include a material gas channel 9 and a fixed orifice 12.

The material gas channel 9 is a channel through which the material gas is supplied to the hydrogen generator 2. The material gas channel 9 is constituted by an upstream material gas channel, a midstream material gas channel, and a downstream material gas channel. A material supply source (not shown) is connected to the material supply unit 3 by the upstream material gas channel 9. The material supply unit 3 is connected to the hydro-desulfurizer 1 by the midstream material gas channel 9. The hydro-desulfurizer 1 is connected to the hydrogen generator 2 by the downstream material gas channel 9.

The material supply unit 3 is a supply unit configured to boost the material gas to supply the material gas to the hydro-desulfurizer 1. The material gas is supplied from the material gas supply source through the upstream material gas channel 9 to the material supply unit 3. The material gas supply source has predetermined supply pressure. Examples of the material gas supply source include a city gas infrastructure, a material gas bomb, and a material gas infrastructure. The material gas is a gas containing an organic compound constituted by carbon and hydrogen. Examples of the material gas include: a city gas containing methane as a major component; a natural gas; and a LPG.

The material supply unit 3 has a function of adjusting the flow rate of the material gas and is constituted by, for example, a booster, such as a booster pump, and a flow rate control valve. For example, used as the booster is a fixed displacement booster pump. The material supply unit 3 may be constituted by any one of the booster and the flow rate control valve.

The hydro-desulfurizer 1 is a reactor configured to cause a sulfur compound in the material gas to react with hydrogen to remove the sulfur compound. The hydro-desulfurizer 1 is connected to the material supply unit 3 by the material gas channel 9. The hydro-desulfurizer 1 is constituted by a container and a desulfurization catalyst which is for hydrodesulfurization and filled in the container. The desulfurization catalyst for hydrodesulfurization is constituted by a reaction catalyst and an adsorption catalyst, and the adsorption catalyst is provided downstream of the reaction catalyst. The reaction catalyst is a catalyst which accelerates a reaction of converting the sulfur compound in the material gas into hydrogen sulfide. For example, a CoMo-based catalyst is used as the reaction catalyst. The adsorption catalyst is a sulfur adsorbent which adsorbs and removes the hydrogen sulfide. Examples of the adsorption catalyst include a ZnO-based catalyst and a CuZn-based catalyst. The desulfurization catalyst for hydrodesulfurization is not limited to this, and for example, only the CuZn-based catalyst may be used. The CuZn-based catalyst has both a function of converting the sulfur compound into hydrogen sulfide and a function of adsorbing the hydrogen sulfide.

The hydrogen generator 2 is a reactor configured to cause a reaction between the material gas having flowed through the hydro-desulfurizer 1 and steam to generate a hydrogen-containing fuel gas. The hydrogen generator 2 is connected to the hydro-desulfurizer 1 by the material gas channel 9. The hydrogen generator 2 includes therein a reformer (not shown). A reforming catalyst is filled in the reformer. The reforming catalyst is a catalyst which accelerates a reforming reaction of generating the fuel gas from the material gas. The reforming reaction may be any type, and examples thereof include a steam-reforming reaction, an autothermal reaction, and a partial oxidation reaction. The hydrogen generator 2 may include therein a CO reducer (not shown). The CO remover may be disposed at the fuel gas channel 10 provided downstream of the hydrogen generator 2.

The hydrogen generator 2 further includes devices necessary for the reforming reaction. For example, for the steam-reforming reaction, a burner portion (not shown), an evaporator (not shown), and a water supply unit (not shown) are provided in the hydrogen generator 2. The burner portion is a combustor configured to combust a combustible gas to heat the reformer. The evaporator is a device configured to generate the steam, and the water supply unit is a device configured to supply water to the evaporator. For the autothermal reaction, an air supply unit (not shown) configured to supply air to the reformer is provided in the hydrogen generator 2.

The fuel cell 8 is a reactor configured to generate electric power using the fuel gas discharged from the hydrogen generator 2 and an oxidizing gas. In the present embodiment, a polymer electrolyte fuel cell (PEFC) is used as the fuel cell 8. However, the type of the fuel cell 8 is not limited to this, and for example, a solid-oxide fuel cell or a phosphoric acid fuel cell may be used.

The fuel cell 8 is connected to the hydrogen generator 2 by the fuel gas channel 10 and is supplied with the fuel gas from the hydrogen generator 2. The fuel cell 8 is connected to an oxidizing gas supply unit (not shown) and is supplied with the oxidizing gas from the oxidizing gas supply unit. In a case where the air supply unit, such as a blower, is used as the oxidizing gas supply unit, oxygen in the air is supplied as the oxidizing gas. The oxidizing gas supply unit is not limited to the air supply unit. For example, in a case where an oxygen bomb is used as the oxidizing gas supply unit, oxygen is supplied as the oxidizing gas.

The fuel cell 8 is connected to the hydrogen generator 2 by the off fuel gas channel 11. The fuel gas (off fuel gas) unconsumed by the power generation of the fuel cell 8 is discharged from the fuel cell 8 through the off fuel gas channel 11. The off fuel gas is supplied to the burner portion of the hydrogen generator 2, and the off fuel gas is combusted by supplied combustion air. With this, the hydro-desulfurizer 1 and the hydrogen generator 2 are heated up to appropriate temperatures of respective catalysts.

The fuel gas channel 10 is a channel through which the fuel gas discharged from the hydrogen generator 2 is supplied to the fuel cell 8. The hydrogen generator 2 is connected to the fuel cell 8 by the fuel gas channel 10.

The recycled gas channel 4 is a channel which branches from a branching portion of the fuel gas channel 10 and by which a part of the fuel gas discharged from the hydrogen generator 2 is mixed with the material gas before the material gas flows into the material supply unit 3. An upstream end of the recycled gas channel 4 is connected to the branching portion of the fuel gas channel 10, and a downstream end thereof is connected to a joint portion of the upstream material gas channel 9.

A position to which the upstream end of the recycled gas channel 4 is connected is not especially limited as long as the fuel gas generated by the hydrogen generator 2 flows to the recycled gas channel 4. For example, the CO reducer is provided downstream of the reformer of the hydrogen generator 2 in some cases. In this case, the fuel gas flows into the CO reducer through a channel between the reformer and the CO reducer. Then, the fuel gas whose carbon monoxide is reduced by the CO reducer is discharged to a channel provided downstream of the CO reducer. Therefore, the upstream end of the recycled gas channel 4 may be connected to the channel between the reformer and the CO reducer, the CO reducer, or the channel provided downstream of the CO reducer.

The CO reducer is constituted by a shift converter and a CO remover in some cases. In this case, the fuel gas having flowed into the CO reducer flows into the shift converter. The fuel gas whose carbon monoxide is reduced by a shift reaction in the shift converter flows into the CO remover through a channel between the shift converter and the CO remover. Then, the fuel gas whose carbon monoxide is further reduced by any one of an oxidation reaction and a methanation reaction in the CO remover is discharged to the channel provided downstream of the CO reducer. Therefore, the upstream end of the recycled gas channel 4 may be connected to the channel between the shift converter and the CO remover.

The fixed orifice 12 is a member disposed at the recycled gas channel 4 and configured to adjust the flow rate of the fuel gas flowing through the recycled gas channel 4. This adjustment of the flow rate is performed by adjusting the balance between back pressure of the hydrogen generator 2 and pressure upstream of the material supply unit 3 (i.e., the supply pressure of the material gas supply source).

The adjustment of the flow rate of the fuel gas in the recycled gas channel 4 is not limited to the adjustment using the fixed orifice 12. For example, the adjustment of the flow rate of the fuel gas may be performed using a variable orifice, such as a needle valve, instead of the fixed orifice 12, or a gas booster may be disposed at the recycled gas channel 4 to perform the adjustment of the flow rate of the fuel gas. However, in order to reduce the size of the fuel cell system 100 and simplify the configuration of the fuel cell system 100, it is preferable that the fixed orifice 12 be used for the adjustment of the flow rate of the fuel gas. In a case where the adjustment of the flow rate can be performed by the other means, the fixed orifice 12 does not have to be provided.

A bypass channel 13 is a channel through which the combustible gas is supplied to the hydrogen generator 2 without flowing through the fuel cell 8. Examples of the combustible gas include the remaining material gas unconsumed by the hydrogen generator 2 and the fuel gas generated by the hydrogen generator 2. An upstream end of the bypass channel 13 is connected to the fuel gas channel 10 provided downstream of the branching portion, and a downstream end thereof is connected to the burner portion of the hydrogen generator 2. A valve 14 is disposed at the bypass channel 13. Instead of the first on-off valve 5 and the valve 14, a three-way valve may be disposed at a position where the fuel gas channel 10 and the bypass channel 13 are connected to each other.

The off fuel gas channel 11 is a channel through which the hydrogen-containing off fuel gas unconsumed by the fuel cell 8 is discharged from the fuel cell 8. An upstream end of the off fuel gas channel 11 is connected to the fuel cell 8, and a downstream end thereof is connected to the burner portion of the hydrogen generator 2. In addition to the off fuel gas channel 11 and the bypass channel 13, a combustible gas supply portion configured to supply the combustible gas to the burner portion may be provided.

The first on-off valve 5 is a valve disposed at the off fuel gas channel 11 and configured to close and open the off fuel gas channel 11. The first on-off valve 5 may be a valve, such as a solenoid valve, configured to operate by electric power or a valve configured to operate by gas pressure. An electromagnetic on-off valve whose opening degree is adjustable may be used as the first on-off valve 5. In this case, when closing the first on-off valve 5, the degree of the closure can be suitably adjusted. Further, when opening the first on-off valve 5, the degree of the opening can be suitably adjusted.

The position of the first on-off valve 5 is not especially limited as long as the first on-off valve 5 can increase the pressure in the recycled gas channel 4 when the first on-off valve 5 is closed in a state where the material supply unit 3 is operating. For example, the first on-off valve 5 may be disposed at the fuel gas channel 10 provided downstream of the branching portion, instead of or together with the off fuel gas channel 11.

The controller 7 has a function of controlling respective devices constituting the fuel cell system 100. For example, the controller 7 includes a calculation processing portion (not shown) and a storage portion (not shown) storing a control program. Examples of the calculation processing portion include a MPU and a CPU. One example of the storage portion is a memory. The controller 7 may be constituted by a single controller which performs centralized control or may be constituted by a plurality of controllers which cooperate to perform distributed control.

The controller 7 is configured to close the first on-off valve 5 and activate the material supply unit 3 when a predetermined condition is satisfied. A clogging eliminating operation constituted by the closure of the first on-off valve 5 and the activation of the material supply unit 3 is executed by the controller 7. The execution of the clogging eliminating operation may be performed by the control program or by a circuit configuration of the controller 7.

### Operations of Fuel Cell System

When starting up the fuel cell system 100, the first on-off valve 5 is closed, and the valve 14 is opened. In this state, the material gas is supplied from the material supply source to the material supply unit 3, and the material supply unit 3 boosts the material gas to supply the material gas to the hydro-desulfurizer 1. After the sulfur compound is removed from the material gas in the hydro-desulfurizer 1, the material gas is supplied to the hydrogen generator 2. The fuel gas is generated from the material gas in the hydrogen generator 2. The unreacted material gas and the fuel gas flow through the fuel gas channel 10 and the bypass channel 13 to be supplied as the combustible gases to the burner portion of the hydrogen generator 2. The combustible gases are combusted in the burner portion to heat the hydro-desulfurizer 1 and the hydrogen generator 2.

At the time of this start-up, the CO reducer may be low in temperature, so that the CO reducer may not adequately achieve its functions. In this case, the fuel gas contains CO, but the fuel gas is not supplied to the fuel cell 8. Therefore, the catalyst of the fuel cell 8 is prevented from being poisoned by the CO.

When the temperature of the CO reducer is increased to an appropriate temperature, the valve 14 is closed, and the first on-off valve 5 is opened. With this, the fuel gas generated by the hydrogen generator 2 flows through the fuel gas channel 10 to be supplied to the fuel cell 8. Thus, the fuel cell system 100 can start an electric power generating operation.

A part of the fuel gas flows as the recycled gas from the fuel gas channel 10 through the branching portion to the recycled gas channel 4. The flow rate of the recycled gas is adjusted by the fixed orifice 12, and the recycled gas flows through the recycled gas channel 4. The recycled gas flows from the recycled gas channel 4 through the joint portion to the upstream material gas channel 9. Here, the recycled gas is mixed with the material gas, supplied from the material supply source, to be supplied to the hydro-desulfurizer 1. In the hydro-desulfurizer 1, the sulfur compound in the material gas reacts with the hydrogen of the recycled gas. With this, the sulfur compound in the material gas is removed. Then, the material gas is supplied to the hydrogen generator 2.

The remaining fuel gas is supplied from the hydrogen generator 2 through the fuel gas channel 10 to the fuel cell 8 to be utilized in the power generation of the fuel cell 8. Here, since the first on-off valve 5 is in an open state, the fuel gas can flow into the fuel cell 8. Then, the remaining off fuel gas unconsumed by the fuel cell 8 is supplied as the combustible gas through the off fuel gas channel 11 to the hydrogen generator 2. The combustible gas is combusted in the burner portion of the hydrogen generator 2, so that the temperatures of the hydro-desulfurizer 1 and the hydrogen generator 2 are maintained at appropriate temperatures.

### Method of Operating Fuel Cell System

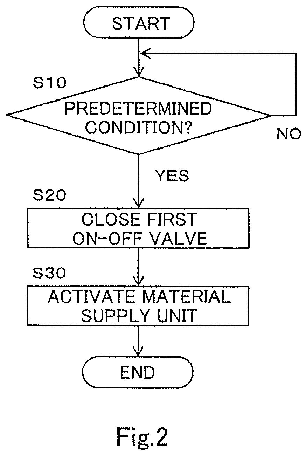

Fig. 2 is a flow chart showing one example of a method of operating the fuel cell system 100. This operation is performed by the controller 7 in accordance with the control program. When starting the power generation of the fuel cell system 100, the valve 14 is closed, and the first on-off valve 5 is opened.

The controller 7 determines whether or not the predetermined condition is satisfied (Step S10). The predetermined condition is a condition for eliminating the clogging of the recycled gas channel 4. When the controller 7 determines that the predetermined condition is not satisfied (No in Step S10), the controller 7 returns to Step S10. In contrast, when the controller 7 determines that the predetermined condition is satisfied (Yes in Step S10), the controller 7 closes the first on-off valve 5 (Step S20).

Then, the controller 7 activates the material gas supply unit 3 (Step S30). Here, when the material gas supply unit 3 is already operating, the operation of the material gas supply unit 3 is maintained. In contrast, when the material gas supply unit 3 is not operating, the material gas supply unit 3 is activated.

### Actions and Effects

When the predetermined condition is satisfied, the controller 7 executes the clogging eliminating operation of closing the first on-off valve 5 and activating the material supply unit 3. By the closure of the first on-off valve 5, the fuel gas flowing through the fuel gas channel 10 does not flow into the fuel cell 8. Here, the material gas supply unit 3 operates to boost the gas. Therefore, the pressure of the gas in the material gas channel 9 and the fuel gas channel 10 is the lowest at a position upstream of the material gas supply unit 3, is the highest at a position immediately downstream of the material gas supply unit 3, and decreases from the material gas supply unit 3 toward the downstream side. With this, the pressure of the fuel gas discharged from the hydrogen generator 2 acts on the recycled gas channel 4, so that the pressure of the fuel gas in the recycled gas channel 4 increases. As a result, even if the recycled gas channel 4 is clogged by the condensed water, the condensed water is pushed by the pressure of the fuel gas to flow, so that the clogging of the recycled gas channel 4 can be eliminated. As a result, harmful effects caused by the clogging of the recycled gas channel 4 can be reduced.

The clogging of the recycled gas channel 4 may be complete clogging or partial clogging. The complete clogging denotes a state where the recycled gas channel 4 is clogged by the condensed water, and the flow of the recycled gas in the recycled gas channel 4 is blocked. The partial clogging denotes a state where a part of the recycled gas channel 4 is clogged by the condensed water, and the amount of recycled gas flowing through the recycled gas channel 4 is reduced.

The first on-off valve 5 is disposed at the off fuel gas channel 11. In a state where the first on-off valve 5 is closed, and the material supply unit 3 is operating, the pressure in the gas channels 4, 9, and 10 and the off fuel gas channel 11 provided upstream of the first on-off valve 5 increases. With this, the devices and the channels may be damaged by the high pressure. However, since the first on-off valve 5 is provided downstream of the fuel cell 8, the hydrogen in the fuel gas remaining in the gas channels 4 and 9 to 11 is consumed by the power generation of the fuel cell 8. Therefore, the excessive pressure increase in the gas channels 4 and 9 to 11 can be prevented, and the life of the fuel cell system 100 can be increased.

### Modification Example 1

In the above embodiment, "during the electric power generating operation of the fuel cell system 100" can be set as the predetermined condition. In this case, Steps S10, S20, and S30 in the operating method of Fig. 2 are executed. Then, in Step S10, in a case where the fuel cell system 100 is not performing the electric power generating operation, the controller 7 determines that the processing condition is not satisfied (No in Step S10). In contrast, in a case where the fuel cell system 100 is performing the electric power generating operation, the controller 7 determines that the processing condition is satisfied (Yes in Step S10).

As above, the clogging eliminating operation of closing the first on-off valve 5 and activating the material supply unit 3 is executed during the electric power generating operation of the fuel cell system 100. By the clogging eliminating operation, the clogging of the recycled gas channel 4 can be eliminated during the electric power generating operation. As a result, the harmful effects caused by the clogging of the recycled gas channel can be reduced. In addition, the fuel cell system 100 does not have to be stopped because of the clogging. Therefore, the decrease in the efficiency of the fuel cell system 100 because of the stop and the start-up can be prevented.

### Modification Example 2

In the above embodiment, "during the stop operation of the fuel cell system 100" can be set as the predetermined condition. In this case, Steps S10, S20, and S30 in the operating method of Fig. 2 are executed. Then, in Step S10, in a case where the fuel cell system 100 is not performing the stop operation, the controller 7 determines that the processing condition is not satisfied (No in Step S10). In contrast, in a case where the fuel cell system 100 is performing the stop operation, the controller 7 determines that the processing condition is satisfied (Yes in Step S10).

As above, the clogging eliminating operation of closing the first on-off valve 5 and activating the material supply unit 3 is executed during the stop operation of the fuel cell system 100. By the clogging eliminating operation, the clogging of the recycled gas channel 4 can be eliminated during the stop operation. As a result, at the time of the next start-up of the fuel cell system 100, the flow of the recycled gas in the recycled gas channel 4 is secured. Thus, the harmful effects caused by the clogging of the recycled gas channel 4 can be reduced.

### Modification Example 3

In the above embodiment, "every predetermined time interval" can be set as the predetermined condition. In this case, Steps S10, S20, and S30 in the operating method of Fig. 2 are executed. Then, a time is measured in Step S10. When the measured time does not reach the predetermined time interval, the controller 7 determines that the processing condition is not satisfied (No in Step S10). In contrast, when the measured time reaches the predetermined time interval, the controller 7 determines that the processing condition is satisfied (Yes in Step S10).

As above, the clogging eliminating operation of closing the on-off valve 5 and activating the material supply unit 3 is executed for every predetermined time interval of the fuel cell system 100. By the clogging eliminating operation, the clogging of the recycled gas channel 4 can be eliminated periodically. Thus, the harmful effects caused by the clogging of the recycled gas channel 4 can be reduced. Further, a sensor which detects the clogging of the recycled gas channel 4 is not required, so that the fuel cell system 100 can be simplified.

It should be noted that the "predetermined time" relates to a time in which the fuel cell system 100 is operating. Especially, the predetermined time relates to a time in which the fuel cell system 100 is continuously operating. It should be noted that whether or not the "predetermined time" has reached may be determined by using a time obtained by adding the operating time before the stop and the operating time after the start-up.

### Modification Example 4

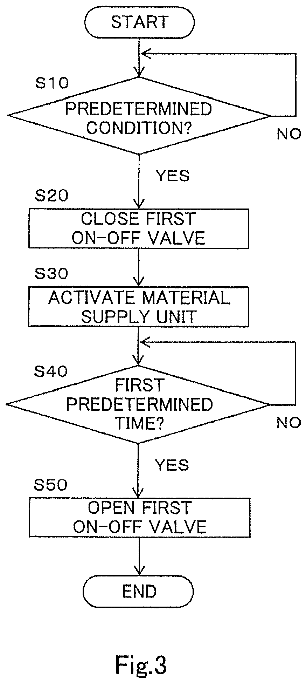

In the above embodiment, the controller 7 may open the first on-off valve 5 after a first predetermined time from the closure of the first on-off valve 5. Fig. 3 is a flow chart showing one example of the method of operating the fuel cell system 100 according to Modification Example 4. Steps S10, S20, and S30 in Fig. 3 are respectively the same as Steps S10, S20, and S30 in Fig. 2.

The controller 7 executes Steps S10, S20, and S30 in the operating method of Fig. 3. In addition, the controller 7 measures a time elapsed from the closure of the first on-off valve 5. The closed state of the first on-off valve 5 is maintained until the measured time reaches the first predetermined time (No in Step S40). With this, the clogging of the recycled gas channel 4 can be eliminated.

In contrast, when the measured time reaches the first predetermined time (Yes in Step S40), the first on-off valve 5 is opened (Step S50). With this, the fuel gas is supplied to the fuel cell 8, so that the fuel cell 8 can generate electric power. Even in a state where the first on-off valve 5 is closed, the fuel cell 8 continues the power generation using the fuel gas remaining in the gas channels 4 and 9 to 11. Therefore, the first predetermined time is set such that the fuel gas in the fuel cell 8 does not excessively lack by the closure of the first on-off valve 5.

As above, a time of the closed state of the first on-off valve 5 is limited to the first predetermined time. Therefore, the deterioration of the fuel cell 8 due to the lack of the fuel gas can be prevented.

Further, the first on-off valve 5 is opened after the first predetermined time, and the fuel gas is supplied to the fuel cell 8. With this, the power generation of the fuel cell 8 can be continued.

### Modification Example 5

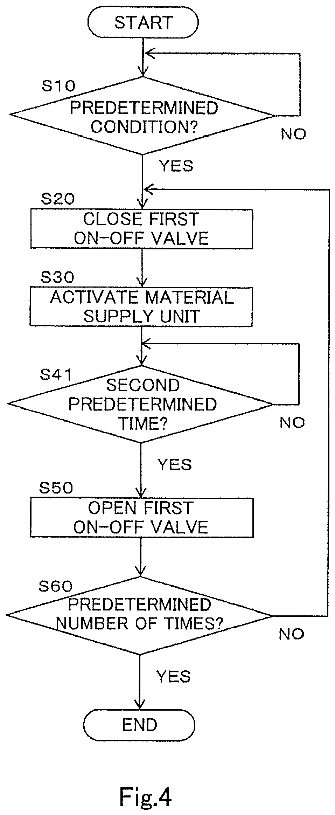

In the above embodiment, the controller 7 may repeat, a predetermined number of times, the closure of the first on-off valve 5 and the opening of the first on-off valve 5 after a second predetermined time from the closure. Fig. 4 is a flow chart showing one example of the method of operating the fuel cell system 100 according to Modification Example 5. Steps S10, S20, and S30 in Fig. 4 are respectively the same as Steps S10, S20, and S30 in Fig. 2.

The controller 7 executes Steps S10, S20, and S30 in the operating method of Fig. 4. In addition, the controller 7 measures a time elapsed from the closure of the first on-off valve 5. The closed state of the first on-off valve 5 is maintained until the measured time reaches the second predetermined time (No in Step S41). In contrast, when the measured time reaches the second predetermined time (Yes in Step S41), the controller 7 opens the first on-off valve 5 (Step S50). The controller 7 counts the number of closing and opening operations (clogging countermeasure operations). More specifically, after the controller 7 determines in Step S10 that the predetermined condition is satisfied, the controller 7 counts the number of times of the execution of a set of Steps S10 to S50. Even in a state where the first on-off valve 5 is closed, the fuel cell 8 continues the power generation using the fuel gas remaining in the gas channels 4 and 9 to 11. Therefore, the second predetermined time is set such that the fuel gas in the fuel cell 8 does not excessively lack by the closure of the first on-off valve 5.

While the number of counts does not reach a predetermined number of times (No in Step S60), the controller 7 returns to Step S20 and repeats Steps S20 to S60. As above, by opening and closing the first on-off valve 5, the pressure in the recycled gas channel 4 fluctuates, so that the condensed water of the recycled gas channel 4 is easily removed. In contrast, when the number of counts reaches the predetermined number of times (Step S60), the clogging eliminating operation terminates.

As above, the clogging countermeasure operation of closing and opening the first on-off valve 5 is repeated. According to this clogging countermeasure operation, the pressure in the recycled gas channel 4 is increased by the closure of the first on-off valve 5, and in addition, the pressure fluctuation is generated by opening and closing the first on-off valve 5. As a result, the clogging can be eliminated more surely. Further, the second predetermined time can be set to be short, so that the deterioration of the fuel cell 8 due to the lack of the fuel gas can be prevented.

### Embodiment 2

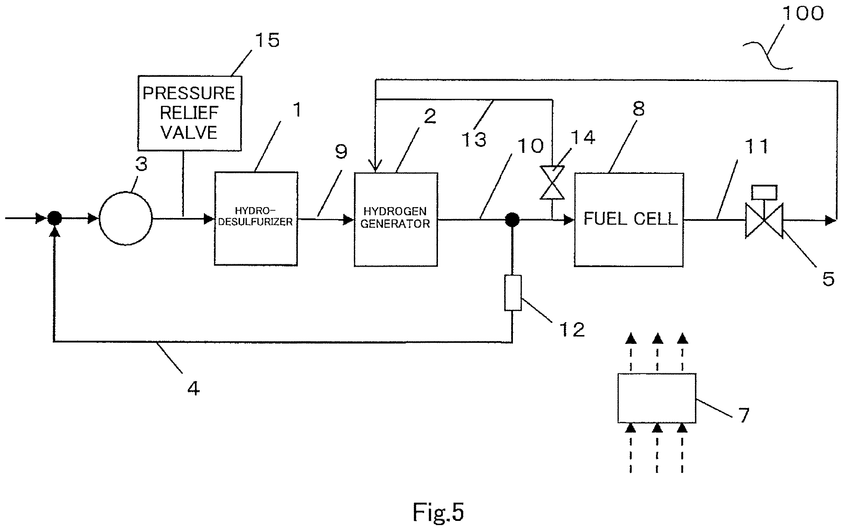

In addition to the components of the fuel cell system 100 according to Embodiment 1, the fuel cell system 100 according to Embodiment 2 further includes a pressure relief valve 15. Fig. 5 is a block diagram showing the configuration of the fuel cell system 100 according to Embodiment 2.

As shown in Fig. 5, the pressure relief valve 15 has a function of opening when the pressure in the channel exceeds the first predetermined pressure. The first predetermined pressure is set based on pressure resistance of the devices and pipes in the fuel cell system 100 and the pressure of the material gas channel 9. To be specific, the first predetermined pressure is set to be lower than pressure by which the devices and pipes are damaged. In addition, the first predetermined pressure is set such that even if the pressure in the channels 4 and 9 to 11 increases by the closure of the first on-off valve 5, the recycled gas does not flow backward from the recycled gas channel 4 to the material supply source. For example, the first predetermined pressure is set such that the pressure of the upstream material gas channel 9 provided downstream of the joint portion becomes lower than each of the pressure of the upstream material gas channel 9 provided upstream of the joint portion and the pressure of the recycled gas channel 4.

In the present embodiment, the pressure relief valve 15 is disposed at the midstream material gas channel 9 extending between the material gas supply unit 3 and the hydro-desulfurizer 1. However, the position of the pressure relief valve 15 is not limited to this. The pressure relief valve 15 may be disposed at any of: the upstream material gas channel 9; the downstream material gas channel 9; a portion, provided upstream of the first on-off valve 5, of the fuel gas channel 10; a portion, provided upstream of the first on-off valve 5, of the off fuel gas channel 11; and the recycled gas channel 4.

The fuel cell system 100 according to Embodiment 2 can operate in accordance with the operating methods explained in Embodiment 1. With this, the clogging of the recycled gas channel 4 can be eliminated, and the harmful effects caused by the clogging can be reduced.

The pressure of the channels 4 and 9 to 11 increases by the closure of the first on-off valve 5. When the pressure of the channels 4 and 9 to 11 reaches the first predetermined pressure, the pressure relief valve 15 opens. With this, the gas is discharged from the channels 4 and 9 to 11, so that the pressure of the channels 4 and 9 to 11 decreases to not higher than the first predetermined pressure. As a result, the devices and pipes are prevented from being damaged, and the life of the fuel cell system 100 is increased.

Further, by the closure of the first on-off valve 5, the pressure of the upstream material gas channel 9 provided downstream of the joint portion becomes higher than the pressure of the upstream material gas channel 9 provided upstream of the joint portion in some cases. In this case, the recycled gas flows backward from the recycled gas channel 4 to the material supply source through the upstream material gas channel 9 provided upstream of the joint portion. In contrast, when the pressure reaches the first predetermined pressure of the pressure relief valve 15, the pressure relief valve 15 opens. Therefore, the recycled gas flows to the upstream material gas channel 9 provided downstream of the joint portion. Thus, the recycled gas is prevented from flowing backward.

The pressure relief valve 15 may be configured to close when the pressure in the channel becomes lower than the second predetermined pressure not higher than the first predetermined pressure after the pressure relief valve 15 opens when the pressure in the channel exceeds the first predetermined pressure.

For example, as shown in Fig. 5, the pressure relief valve 15 is disposed at the midstream material gas channel 9. In this case, when the pressure of the midstream material gas channel 9 reaches the first predetermined pressure by the closure of the pressure relief valve 15, the pressure relief valve 15 automatically opens. With this, the pressure of the midstream material gas channel 9 decreases, and when this pressure reaches the second predetermined pressure, the pressure relief valve 15 closes. Therefore, even if the recycled gas channel 4 is still being clogged, the pressure of the channels 4 and 9 to 11 increases by the closure of the pressure relief valve 15, so that the clogging of the recycled gas channel 4 can be more surely eliminated.

### Modification Example 6

In the above embodiment, the fuel cell system 100 further includes the pressure relief valve 15 in addition to the first on-off valve 5. However, the first on-off valve 5 may be used as the pressure relief valve 15. In this case, the first on-off valve 5 is configured to open when the pressure in a portion, provided upstream of the first on-off valve 5, of the channel at which the first on-off valve 5 is disposed exceeds the first predetermined pressure.

For example, an electromagnetic on-off valve is used as the first on-off valve 5. As shown in Fig. 1, the first on-off valve 5 is disposed at the off fuel gas channel 11. In this case, the pressure of the off fuel gas channel 11 provided upstream of the first on-off valve 5 increases by the closure of the first on-off valve 5, and when this pressure reaches the first predetermined pressure, the first on-off valve 5 automatically opens. With this, the damages of the devices and pipes and the backward flow of the recycled gas by the high pressure can be prevented.

An electromagnetic on-off valve whose opening degree can be adjusted steplessly or in multiple steps may be used as the first on-off valve 5. In this case, when the pressure reaches the first predetermined pressure, the first on-off valve 5 can be opened such that the opening degree thereof becomes smaller than a fully open state. With this, while increasing the pressure in the recycled gas channel 4, the excessive pressure can be prevented by pressure release.

For example, a solenoid valve can be used as the first on-off valve 5. The solenoid valve may be configured such that when the pressure of a fluid in one of the channel provided upstream of the solenoid valve and the channel provided downstream of the solenoid valve increases and exceeds predetermined pressure, the solenoid valve opens, and the fluid flows to the other channel.

### Modification Example 7

In Modification Example 6, the first on-off valve 5 is configured to open when the pressure in the channel provided upstream of the first on-off valve 5 exceeds the first predetermined pressure. The first on-off valve 5 may be configured to close when the pressure in a portion, provided upstream of the first on-off valve 5, of the channel at which the first on-off valve 5 is disposed becomes lower than the second predetermined pressure not higher than the first predetermined pressure after the first on-off valve 5 opens when the pressure in the channel provided upstream of the first on-off valve 5 exceeds the first predetermined pressure.

For example, as shown in Fig. 1, the first on-off valve 5 is disposed at the off fuel gas channel 11. In this case, when the pressure of the off fuel gas channel 11 provided upstream of the first on-off valve 5 reaches the first predetermined pressure by the closure of the first on-off valve 5, the first on-off valve 5 automatically opens. With this, the pressure of the off fuel gas channel 11 provided upstream of the first on-off valve 5 decreases, and when this pressure reaches the second predetermined pressure, the first on-off valve 5 closes. Therefore, even if the recycled gas channel 4 is still being clogged, the clogging can be more surely eliminated by increasing the pressure of the channels 4 and 9 to 11.

### Modification Example 8

According to the fuel cell system 100 of each of Modification Examples 6 and 7, the first on-off valve 5 is configured to automatically open or close when the pressure in the channel provided upstream of the first on-off valve 5 reaches predetermined pressure. However, according to the fuel cell system 100 of Modification Example 8, the operation of opening or closing the first on-off valve 5 is controlled by the controller 7. Therefore, the controller 7 is configured to open the first on-off valve 5 when the pressure detected by a pressure detector 17 exceeds the first predetermined pressure. In Modification Example 8, as with Modification Examples 6 and 7, the first on-off valve 5 serves as a pressure relief valve.

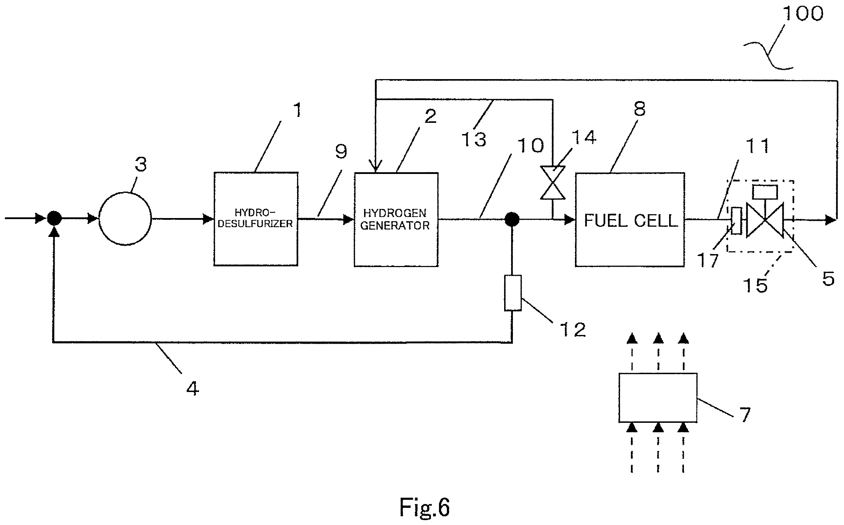

Fig. 6 is a block diagram showing the configuration of the fuel cell system 100 according to Modification Example 8. The fuel cell system 100 further includes the pressure detector 17. The pressure detector 17 is a sensor configured to detect the pressure of a portion, provided upstream of the first on-off valve 5, of the channel at which the first on-off valve 5 is disposed. For example, as shown in Fig. 6, the pressure detector 17 is disposed at the upstream off fuel gas channel 11 extending between the first on-off valve 5 and the fuel cell 8. The pressure detector 17 outputs to the controller 7 a signal regarding the detected pressure.

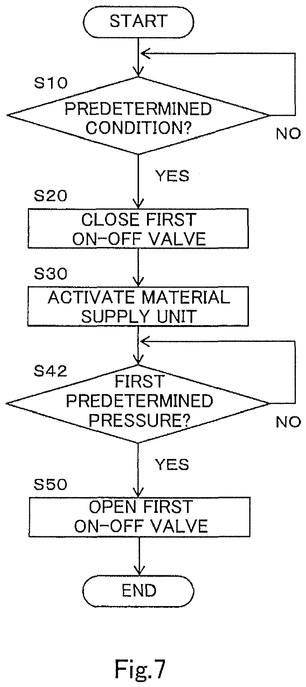

Fig. 7 is a flow chart showing one example of the method of operating the fuel cell system 100 according to Modification Example 8. Steps S10, S20, and S30 in Fig. 7 are respectively the same as Steps S10, S20, and S30 in Fig. 2.

The controller 7 executes Steps S10, S20, and S30 in the operating method of Fig. 7. Then, the controller 7 measures the pressure of the channel provided upstream of the first on-off valve 5. The closed state of the first on-off valve 5 is maintained until the measured pressure reaches the first predetermined pressure (No in Step S42). In contrast, when the measured pressure reaches the first predetermined pressure (Yes in Step S42), the first on-off valve 5 is opened (Step S50). With this, the damages of the devices and pipes and the backward flow of the recycled gas by the high pressure can be prevented.

### Modification Example 9

In Modification Example 8, the controller 7 is configured to open the first on-off valve 5 when the pressure detected by the pressure detector 17 exceeds the first predetermined pressure. In Modification Example 9, the controller 7 is configured to close the first on-off valve 5 when the pressure detected by the pressure detector 17 becomes lower than the second predetermined pressure not higher than the first predetermined pressure after the first on-off valve 5 is opened when the detected pressure exceeds the first predetermined pressure.

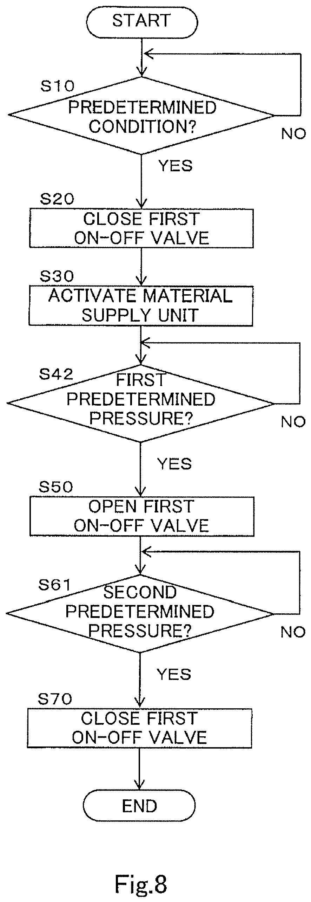

Fig. 8 is a flow chart showing one example of the method of operating the fuel cell system 100 according to Modification Example 9. Steps S10, S20, and S30 in Fig. 8 are respectively the same as Steps S10, S20, and S30 in Fig. 2. Steps S42 and S50 in Fig. 8 are respectively the same as Steps S42 and S50 in Fig. 7.

The controller 7 executes Steps S10, S20, S30, S42, and S50 in the operating method of Fig. 8. Then, the controller 7 causes the pressure detector 17 to detect the pressure of the channel provided upstream of the first on-off valve 5. The open state of the first on-off valve 5 is maintained until the measured pressure reaches the second predetermined pressure (No in Step S61). In contrast, when the measured pressure reaches the second predetermined pressure (Yes in Step S61), the first on-off valve 5 is closed again (Step S70). With this, the clogging can be more surely eliminated by increasing the pressure of the channels 4 and 9 to 11.

If the pressure increases by the closure of the first on-off valve 5 in Step S70 to reach the first predetermined pressure, the first on-off valve 5 may be opened again. To be specific, after Step S70, the Step S42 and subsequent steps may be executed again. Further, Steps S42 to S70 may be repeated until a predetermined time elapses.

### Embodiment 3

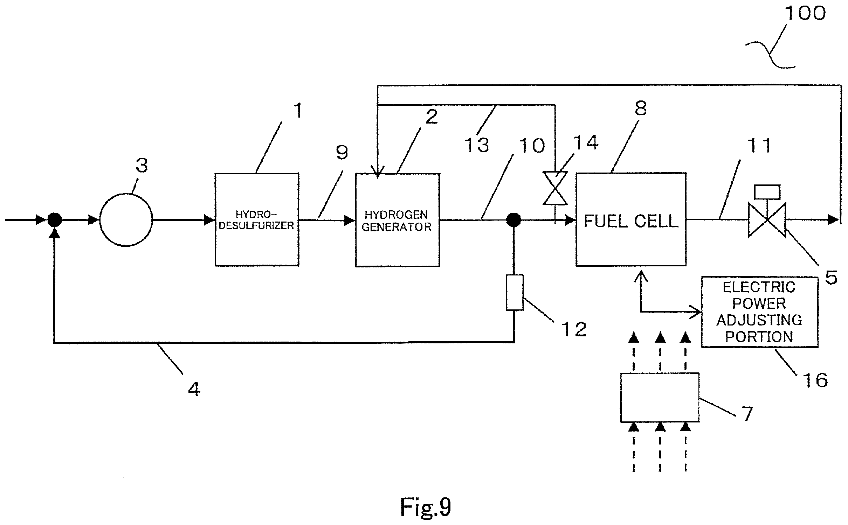

In addition to the components of the fuel cell system 100 according to Embodiment 1, the fuel cell system 100 according to Embodiment 3 further includes an electric power adjusting portion 16. Fig. 9 is a block diagram showing the configuration of the fuel cell system 100 according to Embodiment 3. The fuel cell system 100 according to Embodiment 3 may further include the pressure relief valve 15 or the pressure detector 17 according to Embodiment 2.

As shown in Fig. 9, the electric power adjusting portion 16 is a device configured to adjust electric power output from the fuel cell 8 to an external load or the like. The adjustment of the output electric power is performed by controlling an inverter (not shown) configured to change a current frequency and voltage magnitude of the electric power output from the fuel cell 8.

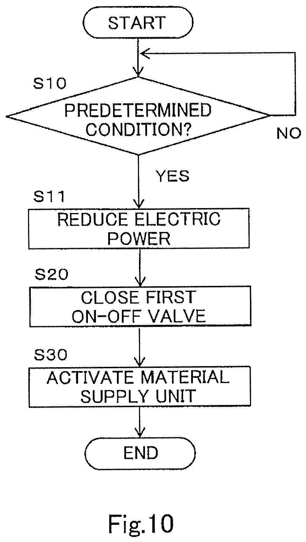

Fig. 10 is a flow chart showing one example of the method of operating the fuel cell system 100 according to Embodiment 3. Steps S10, S20, and S30 in Fig. 10 are respectively the same as Steps S10, S20, and S30 in Fig. 2.

The controller 7 executes Steps S10, S20, and S30 in the operating method of Fig. 10. It should be noted that in this operating method, a step (Step S11) of reducing the electric power is executed between Steps S10 and S20. To be specific, in Step S11, the controller 7 causes the electric power adjusting portion 16 to reduce the output electric power when the first on-off valve 5 is closed during the electric power generating operation of the fuel cell system 100.

As above, by closing the first on-off valve 5, the fuel gas is not supplied to the fuel cell 8. Therefore, the fuel gas remaining in the gas channels 4 and 9 to 11 is used in the power generation of the fuel cell 8. However, since the amount of fuel gas remaining in the gas channels 4 and 9 to 11 is limited, it is concerned that the hydrogen lacks in the fuel cell 8. However, since the output electric power of the fuel cell 8 is reduced, the amount of hydrogen consumed by the power generation of the fuel cell 8 decreases. Therefore, the oxidation of the anode of the fuel cell 8 due to the lack of the hydrogen can be suppressed.

Further, the first on-off valve 5 is disposed at the off fuel gas channel 11. To be specific, the first on-off valve 5 is provided downstream of the fuel cell 8 in the direction in which the fuel gas flows. With this, the fuel gas remaining in the gas channels 4 and 9 to 11 can be utilized in the power generation of the fuel cell 8. Therefore, the lack of the hydrogen in the fuel cell 8 can be suppressed.

### Modification Example 10

In the above embodiment, the controller 7 reduces the output electric power of the electric power adjusting portion 16 when the first on-off valve 5 is closed during the electric power generating operation of the fuel cell system 100. Instead of this, the controller 7 may cause the electric power adjusting portion 16 to increase the output electric power when the first on-off valve 5 is closed during the electric power generating operation of the fuel cell system 100.

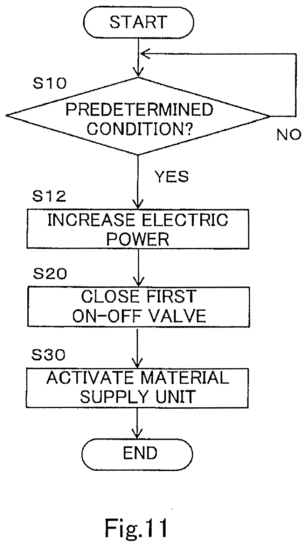

Fig. 11 is a flow chart showing one example of the method of operating the fuel cell system 100 according to Modification Example 10. Steps S10, S20, and S30 in Fig. 11 are respectively the same as Steps S10, S20, and S30 in Fig. 2.

The controller 7 executes Steps S10, S20, and S30 in the operating method of Fig. 11. It should be noted that in this operating method, a step (Step S12) of increasing the electric power is executed between Steps S10 and S20. To be specific, in Step S12, the controller 7 causes the electric power adjusting portion 16 to increase the output electric power when the first on-off valve 5 is closed during the electric power generating operation of the fuel cell system 100.

As above, the first on-off valve 5 is closed, and the material gas supply unit 3 is activated. In this state, the pressure in the gas channels 4, 9, and 10 and the off fuel gas channel 11 provided upstream of the first on-off valve 5 increases. Therefore, there is a concern about the pressure resistance of the devices and channels. However, in the present embodiment, the output electric power of the fuel cell 8 is increased. With this, the amount of hydrogen consumed by the power generation of the fuel cell 8 increases. On this account, the excessive pressure increase in the gas channels 4 and 9 to 11 can be suppressed, and the life of the fuel cell system 100 can be increased.

Further, the first on-off valve 5 is disposed at the off fuel gas channel 11. With this, the fuel gas remaining the gas channels 4 and 9 to 11 is utilized and consumed in the power generation of the fuel cell 8. Therefore, the excessive pressure increase in the gas channels 4 and 9 to 11 can be prevented and suppressed.

### Embodiment 4

In addition to the components of the fuel cell system 100 according to Embodiment 1, the fuel cell system 100 according to Embodiment 4 further includes a clogging detector 6. When the clogging detector 6 detects the clogging, the controller 7 closes the first on-off valve 5 and activates the material supply unit 3.

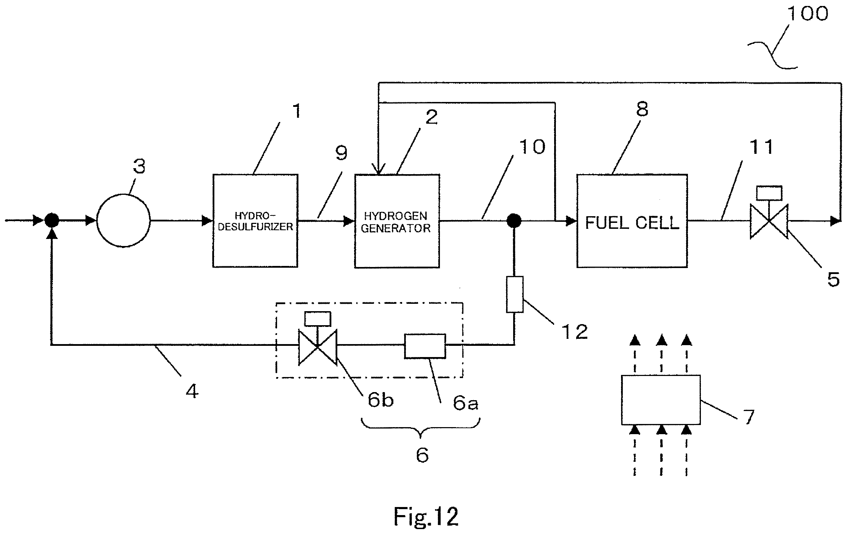

Fig. 12 is a block diagram showing the configuration of the fuel cell system 100 according to Embodiment 4. The fuel cell system 100 according to Embodiment 4 may further include at least one of the pressure relief valve 15 and the pressure detector 17 according to Embodiment 2 and the electric power adjusting portion 16 according to Embodiment 3.

As shown in Fig. 12, the clogging detector 6 is a sensor configured to detect the clogging of the recycled gas channel 4. For example, the clogging detector 6 is constituted by a pressure detector 6a and a second on-off valve 6b. These valves 6a and 6b are disposed at the recycled gas channel 4, and the pressure detector 6a is provided upstream of the second on-off valve 6b. The clogging detector 6 detects the clogging based on the pressure measured by the pressure detector 6a in a state where the second on-off valve 6b is closed.

The configuration of the second on-off valve 6b is not limited as long as the second on-off valve 6b can close and open the recycled gas channel 4. For example, the second on-off valve 6b may be a valve, such as a solenoid valve, configured to operate by electric power or a valve configured to operate by gas pressure.

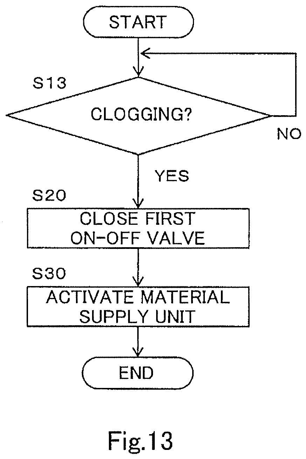

Fig. 13 is a flow chart showing one example of the method of operating the fuel cell system 100 according to Embodiment 3. Steps S20 and S30 in Fig. 13 are respectively the same as Steps S20 and S30 in Fig. 2. Further, the detection of the clogging by the clogging detector 6 in Step S 13 of Fig. 13 corresponds to one example of the predetermined condition in Step S10 of Fig. 2.

The controller 7 executes Steps S13, S20, and S30 in the operating method of Fig. 13. In Step S 13, the controller 7 determines whether or not the clogging detector 6 detects the clogging.

Specifically, the clogging detector 6 closes the second on-off valve 6b and causes the pressure detector 6a to measure the pressure before the closure of the second on-off valve 6b and the pressure after the closure of the second on-off valve 6b. In a state where the recycled gas is flowing through the recycled gas channel 4, the pressure measured after the closure becomes higher than the pressure measured before the closure. In contrast, in a case where the recycled gas channel 4 provided upstream of the second on-off valve 6b clogs, such as in a case where the fixed orifice 12 clogs, the pressure measured after the closure does not become higher than the pressure measured before the closure (the pressure does not fluctuate between before and after the closure). In addition, in a case where the recycled gas channel 4 provided downstream of the second on-off valve 6b clogs, the pressure measured after the closure does not become higher than the pressure measured before the closure (the pressure does not fluctuate between before and after the closure).

As above, when the pressure measured after the closure of the second on-off valve 6b fluctuates from the pressure measured before the closure of the second on-off valve 6b, the controller 7 determines that the clogging detector 6 does not detect the clogging (No in Step S 13). In contrast, when the pressure measured after the closure of the second on-off valve 6b does not fluctuate from the pressure measured before the closure of the second on-off valve 6b, the controller 7 determines that the clogging detector 6 detects the clogging (Yes in Step S13).

According to the above configuration, when the clogging detector 6 detects the clogging, the first on-off valve 5 is closed, and the material supply unit 3 is activated. Therefore, the clogging eliminating operation is performed at an appropriate timing at which the clogging is detected. As a result, the harmful effects caused by the clogging of the recycled gas channel 4 can be more surely reduced.

In the above embodiment, the clogging detector 6 determines the clogging based on the fluctuation in the measured pressure and outputs the determination result to the controller 7. Instead of this, the determination of the clogging may be performed by the controller 7. In this case, the clogging detector 6a outputs the measured pressure to the controller 7, and the controller 7 determines based on the measured pressure whether or not there is the clogging.

In the above embodiment, the clogging detector 6 detects the clogging when the measured pressure does not fluctuate. However, the clogging detector 6 may detect the clogging when the measured pressure does not exceed a predetermined range.

Further, in the above embodiment, the clogging detector 6 constituted by the pressure detector 6a and the second on-off valve 6b is used. However, the configuration of the clogging detector 6 is not limited to this. For example, the clogging detector 6 may be constituted by a temperature detector or a flow rate detector.

The clogging detector 6 constituted by the temperature detector detects the clogging based on the temperature of the recycled gas in the recycled gas channel 4 before the clogging and the temperature of the recycled gas in the recycled gas channel 4 after the clogging. Specifically, the clogging detector 6 measures the temperature of the gas in the recycled gas channel 4 periodically or at arbitrary timings. When the measured temperature exceeds the predetermined range, the clogging detector 6 detects that there is the clogging. For example, if the recycled gas channel 4 clogs, the high-temperature fuel gas from the hydrogen generator 2 is not supplied, and the temperature in the recycled gas channel 4 decreases. Therefore, when the measured temperature decreases to exceed the predetermined range, the clogging detector 6 can detect that there is the clogging.

The clogging detector 6 constituted by the flow rate detector detects the clogging based on the flow rate of the recycled gas flowing through the recycled gas channel 4 before the clogging and the flow rate of the recycled gas flowing through the recycled gas channel 4 after the clogging. Specifically, the clogging detector 6 measures the flow rate of the gas in the recycled gas channel 4 periodically or at arbitrary timings. In a case where the measured flow rate decreases or exceeds a predetermined range, the clogging detector 6 detects that there is the clogging.

The clogging detector 6 does not have to directly measure the flow rate of the recycled gas in the recycled gas channel 4. For example, the clogging detector 6 may calculate the flow rate of the recycled gas from a difference between the flow rate of the material gas supplied from the material supply unit 3 and the flow rate of the gas supplied to the hydro-desulfurizer 1. The flow rate of the material gas supplied from the material supply unit 3 is the flow rate controlled by the controller 7. The flow rate of the gas supplied to the hydro-desulfurizer 1 is the flow rate of a mixture gas containing the material gas supplied to the hydro-desulfurizer 1 and the recycled gas flowing from the recycled gas channel 4 into the material gas channel 9.

### Modification Example 11

In the above embodiment, when the clogging detector 6 detects the clogging during the electric power generating operation of the fuel cell system 100, the controller 7 may start the stop operation of the fuel cell system 100, then close the first on-off valve 5, and activate the material supply unit 3.

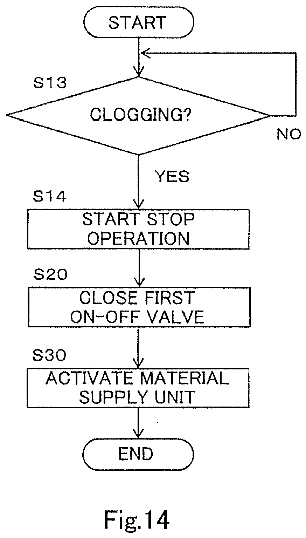

Fig. 14 is a flow chart showing one example of the method of operating the fuel cell system 100 according to Modification Example 11. Steps S20 and S30 in Fig. 11 are respectively the same as Steps S20 and S30 in Fig. 2. Step S13 in Fig. 11 is the same as Step S13 in Fig. 13.

The controller 7 executes Steps S13, S20, and S30 in the operating method of Fig. 14. It should be noted that in this operating method, a step (Step S 14) of starting the stop operation of the fuel cell system 100 is executed between Steps S13 and S20. To be specific, in Step S 14, when the clogging is detected during the electric power generating operation of the fuel cell system 100, the controller 7 starts the stop operation of the fuel cell system 100 and then executes the clogging eliminating operation.

As above, when the clogging is detected, the stop operation of the fuel cell system 100 is started, and then the clogging eliminating operation is executed. Therefore, the clogging eliminating operation can be performed in a state where the time is not limited by the lack of the hydrogen for the power generation of the fuel cell 8. Thus, the clogging can be more surely eliminated.

The stop operation of the fuel cell system 100 is started before closing the first on-off valve 5. With this, the lack of the hydrogen by the power generation of the fuel cell 8 in a state where the fuel gas is not supplied by the closure of the first on-off valve 5 is suppressed. Therefore, the harmful effects of the fuel cell 8 due to the lack of the hydrogen can be prevented.

Further, the clogging of the recycled gas channel 4 is eliminated during the stop operation of the fuel cell system 100. With this, the flow of the recycled gas in the recycled gas channel 4 can be secured at the time of the next start-up of the fuel cell system 100.

### Modification Example 12

In the above embodiment, the controller 7 may open the first on-off valve 5 when the clogging detector 6 does not detect the clogging after the first on-off valve 5 is closed when the clogging detector 6 detects the clogging.

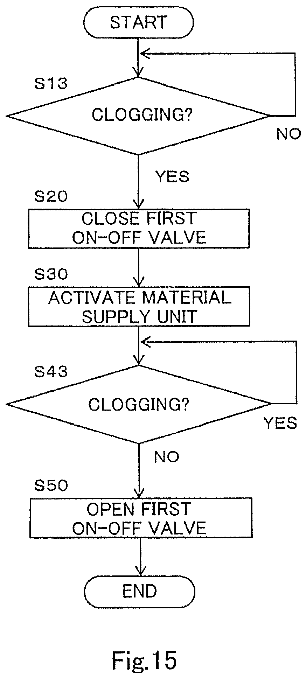

Fig. 15 is a flow chart showing one example of the method of operating the fuel cell system 100 according to Modification Example 12. Steps S20 and S30 in Fig. 15 are respectively the same as Steps S20 and S30 in Fig. 2. Step S 13 in Fig. 15 is the same as Step S13 in Fig. 13.

The controller 7 executes Steps S13, S20, and S30 in the operating method of Fig. 15. Then, until the clogging detector 6 does not detect the clogging (Yes in Step S43), the controller 7 determines whether or not the clogging detector 6 detects the clogging (Step S43). In contrast, when the clogging detector 6 does not detect the clogging (No in Step S43), the controller 7 opens the first on-off valve 5 (Step S50).

According to the above configuration, when the clogging is not detected, the first on-off valve 5 is opened. With this, when the clogging is eliminated, the first on-off valve 5 quickly opens, and a normal state is restored. As a result, the fuel gas flows to the off fuel gas channel 11, so that the excessive pressure increase in the gas channels 4 and 9 to 11 can be prevented. Further, the fuel gas is supplied to the fuel cell 8, so that the lack of the hydrogen in the fuel cell 8 can be avoided.

In Steps S13 and S43, the detection of the clogging by the clogging detector 6 is determined. Instead of this, whether or not the pressure measured by the clogging detector 6 is within a predetermined range may be determined. In this case, in each of Steps S13 and S43, whether or not the pressure measured by the clogging detector 6 exceeds the predetermined range is determined. When the measured pressure exceeds the predetermined range (Yes in Step S 13), the controller 7 determines that there is the clogging, so that the first on-off valve 5 is closed (Step S20). When the measured pressure returns to the predetermined range (No in Step S43), the controller determines that there is no clogging, so that the first on-off valve 5 is opened (Step S50).

### Modification Example 13

In the above embodiment, when the clogging detector 6 detects the clogging, the controller 7 may repeat the closure of the first on-off valve 5 and the opening of the first on-off valve 5 after the third predetermined time from the closure of the first on-off valve 5 until the clogging detector 6 does not detect the clogging. The third predetermined time is set such that even in a state where the first on-off valve 5 is closed, the lack of the fuel gas in the fuel cell 8 does not occur.

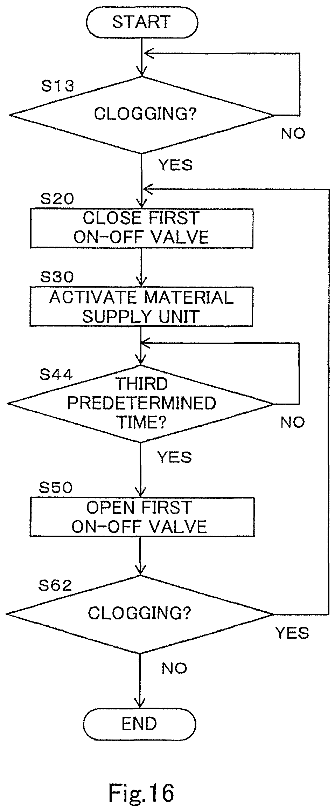

Fig. 16 is a flow chart showing one example of the method of operating the fuel cell system 100 according to Modification Example 13. Steps S20 and S30 in Fig. 16 are respectively the same as Steps S20 and S30 in Fig. 2. Step S13 in Fig. 16 is the same as Step S 13 in Fig. 13.

The controller 7 executes Steps S13, S20, and S30 in the operating method of Fig. 16. In addition, the controller 7 measures a time elapsed from the closure of the first on-off valve 5. The closed state of the first on-off valve 5 is maintained until the measured time reaches the third predetermined time (No in Step S44).

In contrast, when the measured time reaches the third predetermined time (Yes in Step S44), the controller 7 opens the first on-off valve 5 (Step S50). Then, the controller 7 again determines whether or not there is the clogging (Step S62). While the clogging is not eliminated (Yes in Step S62), the controller 7 returns to Step S20 and repeats Steps S20 to S62. In contrast, when the clogging is eliminated (No in Step S62), the clogging eliminating operation terminates.

According to the above configuration, the clogging countermeasure operation of closing and opening the first on-off valve 5 is repeated. With this, the clogging is more surely prevented, and the third predetermined time is shortened.

The above embodiments may be combined with one another as long as they do not conflict with each other.

From the foregoing explanation, many modifications and other embodiments of the present invention are obvious to one skilled in the art. Therefore, the foregoing explanation should be interpreted only as an example and is provided for the purpose of teaching the best mode for carrying out the present invention to one skilled in the art. The structures and/or functional details may be substantially modified within the scope of the present invention as claimed.

### Industrial Applicability

The fuel cell system and the fuel cell system operating method according to the present invention are useful as, for example, a fuel cell system and a fuel cell system operating method, each of which is capable of reducing harmful effects caused by clogging of a recycled gas channel.

### Reference Signs List

- 1: hydro-desulfurizer
- 2: hydrogen generator
- 3: material supply unit
- 4: recycled gas channel
- 5: first on-off valve
- 6: clogging detector
- 7: controller
- 8: fuel cell
- 9: material gas channel
- 10: fuel gas channel
- 11: off fuel gas channel
- 16: electric power adjusting portion
- 17: pressure detector
- 100: fuel cell system

## Claims

1. A fuel cell system comprising:
a hydro-desulfurizer (1) configured to cause a sulfur compound in a material gas to react with hydrogen to remove the sulfur compound;
a material supply unit (3) configured to boost the material gas to supply the material gas to the hydro-desulfurizer (1);
a hydrogen generator (2) configured to cause a reaction between the material gas having flowed through the hydro-desulfurizer (1) and steam to generate a hydrogen-containing fuel gas;
a fuel cell (8) configured to generate electric power using the fuel gas discharged from the hydrogen generator (2) and an oxidizing gas;
a fuel gas channel (10) through which the fuel gas discharged from the hydrogen generator (2) is supplied to the fuel cell (8);
a recycled gas channel (4) which branches from a branching portion of the fuel gas channel (10) and by which a part of the fuel gas discharged from the hydrogen generator (2) is mixed with the material gas before the material gas flows into the material supply unit (3);
an off fuel gas channel (11) through which a hydrogen-containing off fuel gas unconsumed by the fuel cell (8) is discharged from the fuel cell (8);
a first on-off valve (5); a clogging detector (6) configured to detect clogging of the recycled gas channel (4); and
a controller (7), wherein
the clogging detector (6) is selected from the group consisting of a pressure detector, a temperature detector and a flow rate detector, and
the controller (7) is configured to close the first on-off valve (5) and activate the material supply unit (3) when the clogging detector (6) detects the clogging, **characterized in that** the first on-off valve (5) is disposed at at least one of the fuel gas channel (10) provided downstream of the branching portion and the off fuel gas channel (11).

2. The fuel cell system according to claim 1, further comprising:
a material gas channel (9) through which the material gas is supplied to the hydrogen generator (2), and
a pressure relief valve (15) disposed at any of: the material gas channel (9); a portion, provided upstream of the first on-off valve (5), of the fuel gas channel (10); a portion, provided upstream of the first on-off valve (5), of the off fuel gas channel (11); and the recycled gas channel (4) and configured to open when pressure in the channel at which the pressure relief valve is disposed exceeds first predetermined pressure.

3. The fuel cell system according to claim 1, wherein the first on-off valve (5) is configured to open when pressure in a portion, provided upstream of the first on-off valve (5), of the channel at which the first on-off valve (5) is disposed exceeds first predetermined pressure.

4. The fuel cell system according to claim 3, wherein the first on-off valve (5) is configured to close when the pressure in the portion, provided upstream of the first on-off valve (5), of the channel at which the first on-off valve (5) is disposed becomes lower than second predetermined pressure not higher than the first predetermined pressure after the first on-off valve (5) is opened when the pressure in the portion, provided upstream of the first on-off valve (5), of the channel at which the first on-off valve is disposed exceeds the first predetermined pressure.

5. The fuel cell system according to claim 1, further comprising a pressure detector (17) configured to detect pressure in a portion, provided upstream of the first on-off valve (5), of the channel at which the first on-off valve (5) is disposed, wherein
the controller (7) is configured to open the first on-off valve (5) when the pressure detected by the pressure detector (17) exceeds first predetermined pressure.

6. The fuel cell system according to claim 5, wherein the controller (7) is configured to close the first on-off valve (5) when the pressure detected by the pressure detector (17) becomes lower than second predetermined pressure not higher than the first predetermined pressure after the first on-off valve (5) is opened when the pressure detected by the pressure detector (17) exceeds the first predetermined pressure.

7. The fuel cell system according to any one of claims 1 to 6, wherein the controller (7) is configured to close the first on-off valve (5) and activate the material supply unit (3) during an electric power generating operation of the fuel cell system.

8. The fuel cell system according to any one of claims 1 to 6, wherein the controller (7) is configured to close the first on-off valve (5) and activate the material supply unit (3) during a stop operation of the fuel cell system.

9. The fuel cell system according to any one of claims 1 to 8, wherein the controller (7) is configured to close the first on-off valve (5) and activate the material supply unit (3) for every predetermined time.

10. The fuel cell system according to any one of claims 1 to 9, wherein the first on-off valve (5) is disposed at the off fuel gas channel (11).

11. The fuel cell system according to any one of claims 1 to 10, further comprising an electric power adjuster (16) configured to adjust output electric power from the fuel cell (8), wherein:
the first on-off valve (5) is disposed at the off fuel gas channel (11); and
the controller (7) is configured to reduce the output electric power of the electric power adjuster (16) when the first on-off valve (5) is closed during the electric power generating operation of the fuel cell system.

12. The fuel cell system according to any one of claims 1 to 10, further comprising an electric power adjuster (16) configured to adjust output electric power from the fuel cell (8), wherein:
the first on-off valve (5) is disposed at the off fuel gas channel (11); and
the controller (7) is configured to increase the output electric power of the electric power adjuster (16) when the first on-off valve (5) is closed during the electric power generating operation of the fuel cell system.

13. The fuel cell system according to any one of claims 1 to 12, wherein the controller (7) is configured to open the first on-off valve (5) after a first predetermined time from the closure of the first on-off valve (5).

14. The fuel cell system according to any one of claims 1 to 13, wherein the controller (7) is configured to repeat, a predetermined number of times, the closure of the first on-off valve (5) and the opening of the first on-off valve (5) after a second predetermined time from the closure.

15. The fuel cell system according to any one of claims 1 to 14, wherein the controller (7) is configured to start the stop operation of the fuel cell system, then close the first on-off valve (5), and activate the material supply unit (3) when the clogging detector (6) detects the clogging during the electric power generating operation of the fuel cell system.

16. The fuel cell system according to any one of claims 1 to 15, wherein the controller (7) is configured to open the first on-off valve (5) when the clogging detector (6) does not detect the clogging after the first on-off valve (5) is closed when the clogging detector (6) detects the clogging.

17. The fuel cell system according to any one of claims 1 to 16, wherein the controller (7) is configured to, when the clogging detector (6) detects the clogging, repeat the closure of the first on-off valve (5) and the opening of the first on-off valve (5) after a third predetermined time from the closure until the clogging detector (6) does not detect the clogging.

18. A method of operating a fuel cell system,
the fuel cell system comprising:
a hydro-desulfurizer (1) configured to cause a sulfur compound in a material gas to react with hydrogen to remove the sulfur compound;
a material supply unit (3) configured to boost the material gas to supply the material gas to the hydro-desulfurizer (1);
a hydrogen generator (2) configured to cause a reaction between the material gas having flowed through the hydro-desulfurizer (1) and steam to generate a hydrogen-containing fuel gas;
a fuel cell (8) configured to generate electric power using the fuel gas discharged from the hydrogen generator (2) and an oxidizing gas;
a fuel gas channel (10) through which the fuel gas discharged from the hydrogen generator (2) is supplied to the fuel cell (8);
a recycled gas channel (4) which branches from a branching portion of the fuel gas channel (10) and by which a part of the fuel gas discharged from the hydrogen generator (2) is mixed with the material gas before the material gas flows into the material supply unit (3);
an off fuel gas channel (11) through which a hydrogen-containing off fuel gas unconsumed by the fuel cell (8) is discharged from the fuel cell (8);
a first on-off valve (5) disposed at at least one of the fuel gas channel (10) provided downstream of the branching portion and the off fuel gas channel (11); and
a clogging detector (6) configured to detect clogging of the recycled gas channel (4), the clogging detector (6) is selected from the group consisting of a pressure detector, a temperature detector and a flow rate detector, and
the method comprising
closing the first on-off valve (5) and activating the material supply unit (3) when the clogging detector (6) detects the clogging.

## Patentansprüche

1. Brennstoffzellensystem, umfassend:
einen Hydroentschwefler (1), der ausgelegt ist zu veranlassen, eine Schwefelkomponente in einem stofflichen Gas zur Reaktion mit Wasserstoff zu bringen, um die Schwefelkomponente zu entfernen;
eine Materialzuführeinheit (3), die ausgelegt ist, das stoffliche Gas zu aktivieren, um es dem Hydroentschwefler (1) zuzuführen;
einen Wasserstoffgenerator (2), der ausgelegt ist, eine Reaktion zwischen dem den Hydroentschwefler (1) durchströmten, stofflichen Gas und Dampf zu bewirken, um ein wasserstoffhaltiges Brenngas zu erzeugen;
eine Brennstoffzelle (8), die ausgelegt ist, unter Verwendung des von dem Wasserstoffgenerator (2) abgegebenen Brenngases und eines Oxidationsgases elektrische Leistung zu erzeugen;
einen Brenngaskanal (10), durch den das vom Wasserstoffgenerator (2) abgegebene Brenngas der Brennstoffzelle (8) zugeführt wird;
einen Kanal für rückgeführtes Gas (4), der sich von einem Verzweigungsbereich des Brenngaskanals (10) verzweigt und durch den ein Teil des vom Wasserstoffgenerator (2) abgegebenen Brenngases mit dem stofflichen Gas vermischt wird, bevor das stoffliche Gas in die Materialzuführeinheit (3) strömt;
einen Brennstoffabgaskanal (11), durch den ein von der Brennstoffzelle (8) unverbrauchtes, wasserstoffhaltiges Brennstoffabgas aus der Brennstoffzelle (8) abgegeben wird;
ein erstes Schaltventil (5);
einen Verstopfungsdetektor (6), der ausgelegt ist, eine Verstopfung des Kanals für rückgeführtes Gas (4) zu erkennen; und einen Regler (7), wobei
der Verstopfungsdetektor (6) ausgewählt ist aus der Gruppe, die aus einem Druckdetektor, einem Temperaturdetektor und einem Durchflussmengendetektor besteht, und
der Regler (7) ist ausgelegt, das erste Schaltventil (5) zu schließen und die Materialzuführeinheit (3) zu aktivieren, wenn der Verstopfungsdetektor (6) die Verstopfung erkennt, **dadurch gekennzeichnet, dass** das erste Schaltventil (5) an dem stromabwärts des Verzweigungsbereichs vorgesehenen Brenngaskanal (10) und/oder dem Brennstoffabgaskanal (11) vorgesehen ist.

2. Brennstoffzellensystem nach Anspruch 1, des Weiteren umfassend:
einen Kanal (9) für stoffliches Gas, durch den das stoffliche Gas dem Wasserstoffgenerator (2) zugeführt wird, und
ein Druckbegrenzungsventil (15), das angeordnet ist an einem von: dem Kanal (9) für stoffliches Gas; einem Bereich, der von dem ersten Schaltventil (5) des Brenngaskanals (10) stromaufwärts vorgesehen ist; einem Bereich, der von dem ersten Schaltventil (5) des Brennstoffabgaskanals (11) stromaufwärts vorgesehen ist; und dem Kanal für rückgeführtes Gas (4), und das ausgelegt ist, sich zu öffnen, wenn der Druck in dem Kanal, an dem das Druckbegrenzungsventil angeordnet ist, einen ersten vorbestimmten Druck überschreitet.

3. Brennstoffzellensystem nach Anspruch 1, wobei das erste Schaltventil (5) ausgelegt ist, sich zu öffnen, wenn der Druck in einem Bereich des Kanals, der von dem ersten Schaltventil (5) stromaufwärts vorgesehen ist, an dem das erste Schaltventil (5) angeordnet ist, den ersten vorbestimmten Druck überschreitet.

4. Brennstoffzellensystem nach Anspruch 3, wobei das erste Schaltventil (5) ausgelegt ist, sich zu schließen, wenn der Druck in dem Bereich des Kanals, der von dem ersten Schaltventil (5) stromaufwärts vorgesehen ist, an dem das erste Schaltventil (5) angeordnet ist, geringer wird als ein zweiter vorbestimmter Druck, der nicht höher ist als der erste vorbestimmte Druck nach dem Öffnen des ersten Schaltventils (5), wenn der Druck im Bereich des Kanals, der von dem ersten Schaltventil (5) stromaufwärts vorgesehen ist, an dem das erste Schaltventil (5) angeordnet ist, den ersten vorbestimmten Druck überschreitet.

5. Brennstoffzellensystem nach Anspruch 1, des Weiteren umfassend einen Druckdetektor (17), der ausgelegt ist, einen Druck zu erfassen in einem Bereich des Kanals, der von dem ersten Schaltventil (5) stromaufwärts vorgesehen ist, an dem das erste Schaltventil (5) angeordnet ist, wobei der Regler (7) ausgelegt ist, das erste Schaltventil (5) zu öffnen, wenn der von dem Druckdetektor (17) erfasste Druck den ersten vorbestimmten Druck überschreitet.

6. Brennstoffzellensystem nach Anspruch 5, wobei der Regler (7) ausgelegt ist, das erste Schaltventil (5) zu schließen, wenn der vom Druckdetektor (17) erfasste Druck niedriger wird als ein zweiter vorbestimmter Druck, nicht höher als der erste vorbestimmte Druck, nachdem das erste Schaltventil (5) geöffnet wurde, wenn der von dem Druckdetektor (17) erfasste Druck den ersten vorbestimmten Druck überschreitet.

7. Brennstoffzellensystem nach einem der Ansprüche 1 bis 6, wobei der Regler (7) ausgelegt ist, das erste Schaltventil (5) zu schließen und die Materialzuführeinheit (3) während des Erzeugungsvorgangs von elektrischer Leistung des Brennstoffzellensystems zu aktivieren.

8. Brennstoffzellensystem nach einem der Ansprüche 1 bis 6, wobei der Regler (7) ausgelegt ist, das erste Schaltventil (5) zu schließen und die Materialzuführeinheit (3) während einer Arbeitsunterbrechung des Brennstoffzellensystems zu aktivieren.

9. Brennstoffzellensystem nach einem der Ansprüche 1 bis 8, wobei der Regler (7) ausgelegt ist, das erste Schaltventil (5) zu schließen und die Materialzuführeinheit (3) zu jeder vorbestimmten Zeit zu aktivieren.

10. Brennstoffzellensystem nach einem der Ansprüche 1 bis 9, wobei das erste Schaltventil (5) an dem Brennstoffabgaskanal (11) angeordnet ist.

11. Brennstoffzellensystem nach einem der Ansprüche 1 bis 10, des Weiteren umfassend einen elektrischen Leistungsregler (16), der ausgelegt ist, die von der Brennstoffzelle (8) abgegebene elektrische Leistung zu regeln, wobei:
das erste Schaltventil (5) an dem Brennstoffabgaskanal (11) angeordnet ist; und
der Regler (7) ausgelegt ist, die abgegebene elektrische Leistung des elektrischen Leistungsreglers (16) zu reduzieren, wenn das erste Schaltventil (5) während des Erzeugungsvorgangs elektrischer Leistung des Brennstoffzellensystems geschlossen ist.

12. Brennstoffzellensystem nach einem der Ansprüche 1 bis 10, des Weiteren umfassend einen elektrischen Leistungsregler (16), der ausgelegt ist, abgegebene elektrische Leistung von der Brennstoffzelle (8) zu regeln, wobei:
das erste Schaltventil (5) an dem Brennstoffabgaskanal (11) angeordnet ist; und
der Regler (7) ausgelegt ist, die abgegebene elektrische Leistung des Leistungsreglers (16) zu erhöhen, wenn das erste Schaltventil (5) während des Erzeugungsvorgangs elektrischer Leistung des Brennstoffzellensystems geschlossen ist.

13. Brennstoffzellensystem nach einem der Ansprüche 1 bis 12, wobei der Regler (7) ausgelegt ist, das erste Schaltventil (5) nach einer ersten vorbestimmten Zeit vom Schließen des ersten Schaltventils (5) an zu öffnen.

14. Brennstoffzellensystem nach einem der Ansprüche 1 bis 13, wobei der Regler (7) ausgelegt ist, eine vorbestimmte Zahl von Malen das Schließen des ersten Schaltventils (5) und das Öffnen des ersten Schaltventils (5) nach einer zweiten vorbestimmten Zeit vom Schließen an zu wiederholen.

15. Brennstoffzellensystem nach einem der Ansprüche 1 bis 14, wobei der Regler (7) ausgelegt ist, die Arbeitsunterbrechung des Brennstoffzellensystems zu starten, danach das erste Schaltventil (5) zu schließen und die Materialzuführeinheit (3) zu aktivieren, wenn der Verstopfungsdetektor (6) die Verstopfung während des Erzeugungsvorgangs elektrischer Leistung des Brennstoffzellensystems erkennt.

16. Brennstoffzellensystem nach einem der Ansprüche 1 bis 15, wobei der Regler (7) ausgelegt ist, das erste Schaltventil (5) zu öffnen, wenn der Verstopfungsdetektor (6) die Verstopfung nicht erkennt, nachdem das erste Schaltventil (5) geschlossen ist, wenn der Verstopfungsdetektor (6) die Verstopfung erkennt.

17. Brennstoffzellensystem nach einem der Ansprüche 1 bis 16, wobei der Regler (7) ausgelegt ist, wenn der Verstopfungsdetektor (6) die Verstopfung erkennt, das Schließen des ersten Schaltventils (5) und das Öffnen des ersten Schaltventils (5) nach einer dritten vorbestimmten Zeit vom Schließen an zu wiederholen, bis der Verstopfungsdetektor (6) keine Verstopfung erkennt.

18. Verfahren zum Betreiben eines Brennstoffzellensystems,
das Brennstoffzellensystem umfasst:
einen Hydroentschwefler (1), der ausgelegt ist zu veranlassen, eine Schwefelkomponente in einem stofflichen Gas zur Reaktion mit Wasserstoff zu bringen, um die Schwefelkomponente zu entfernen;
eine Materialzuführeinheit (3), die ausgelegt ist, das stoffliche Gas zu aktivieren, um es dem Hydroentschwefler (1) zuzuführen;
einen Wasserstoffgenerator (2), der ausgelegt ist, eine Reaktion zwischen dem den Hydroentschwefler (1) durchströmten, stofflichen Gas und Dampf zu bewirken, um ein wasserstoffhaltiges Brenngas zu erzeugen;
eine Brennstoffzelle (8), die ausgelegt ist, unter Verwendung des von dem Wasserstoffgenerator (2) abgegebenen Brenngases und eines Oxidationsgases elektrische Leistung zu erzeugen;
einen Brenngaskanal (10), durch den das vom Wasserstoffgenerator (2) abgegebene Brenngas der Brennstoffzelle (8) zugeführt wird;
einen Kanal (4) für rückgeführtes Gas, der sich von einem Verzweigungsbereich des Brenngaskanals (10) verzweigt und durch den ein Teil des vom Wasserstoffgenerator (2) abgegebenen Brenngases mit dem stofflichen Gas vermischt wird, bevor das stoffliche Gas in die Materialzuführeinheit (3) strömt;
einen Brennstoffabgaskanal (11), durch den ein von der Brennstoffzelle (8) unverbrauchtes wasserstoffhaltiges Brennstoffabgas aus der Brennstoffzelle (8) abgegeben wird;
ein erstes Schaltventil (5), das an einem stromabwärts des Verzweigungsbereichs vorgesehenen Brenngaskanal (10) und/oder dem Brennstoffabgaskanal (11) angeordnet ist.
einen Verstopfungsdetektor (6), der ausgelegt ist, eine Verstopfung des Kanals (4) für rückgeführtes Gas zu erkennen, wobei der Verstopfungsdetektor (6) aus der Gruppe ausgewählt ist, die aus einem Druckdetektor, einem Temperaturdetektor und einem Durchflussmengendetektor besteht, und
das Verfahren
das Schließen des ersten Schaltventils (5) und Aktivieren der Materialzuführeinheit (3), wenn der Verstopfungsdetektor (6) die Verstopfung erkennt, umfasst.

## Revendications

1. Système pile à combustible comprenant :
un hydro-désulfuriseur (1) configuré pour faire réagir un composé soufré dans un matériau gazeux avec de l'hydrogène pour retirer le composé soufré ;
une unité d'alimentation de matière (3) configurée pour forcer le matériau gazeux à alimenter le matériau gazeux au niveau de l'hydro-désulfuriseur (1) ;
un générateur d'hydrogène (2) configuré pour entraîner une réaction entre le matériau gazeux qui s'est écoulé à travers l'hydro-désulfuriseur (1) et la vapeur pour générer un gaz combustible contenant de l'hydrogène ;
une pile à combustible (8) configurée pour générer de l'énergie électrique en utilisant le gaz combustible évacué du générateur d'hydrogène (2) et un gaz oxydant ;
un canal de gaz combustible (10) à travers lequel le gaz combustible évacué du générateur d'hydrogène (2) est alimenté à la pile à combustible (8) ;
un canal de gaz recyclé (4) qui se ramifie depuis une partie de ramification du canal de gaz combustible (10) et par lequel une partie du gaz combustible évacué du générateur d'hydrogène (2) est mélangée avec le matériau gazeux avant que le matériau gazeux s'écoule dans l'unité d'alimentation de matière (3) ;
un canal de gaz combustible d'échappement (11) à travers lequel un gaz combustible d'échappement contenant de l'hydrogène non consommé par la pile à combustible (8) est évacué de la pile à combustible (8) ;
une première vanne de mise en marche-arrêt (5) ;
un détecteur de colmatage (6) configuré pour détecter le colmatage du canal de gaz recyclé (4) ; et un dispositif de commande (7),
le détecteur de colmatage (6) étant sélectionné dans le groupe constitué d'un détecteur de pression, d'un détecteur de température et d'un détecteur de débit d'écoulement, et
le dispositif de commande (7) étant configuré pour fermer la première vanne de mise en marche-arrêt (5) et activer l'unité d'alimentation de matière (3) lorsque le détecteur de colmatage (6) détecte le colmatage, **caractérisé en ce que** la première vanne de mise en marche-arrêt (5) est disposée au niveau d'au moins l'un dudit canal de gaz combustible (10) prévu en aval de la partie de ramification et du canal de gaz combustible d'échappement (11).

2. Système pile à combustible selon la revendication 1, comprenant en outre :
un canal de matériau gazeux (9) à travers lequel le matériau gazeux est alimenté au générateur d'hydrogène (2), et
une vanne de surpression (15) disposée au niveau de n'importe lequel: du canal de matériau gazeux (9) ; une partie, prévue en amont de la première vanne de mise en marche-arrêt (5), du canal de gaz combustible (10) ; une partie, prévue en amont de la première vanne de mise en marche-arrêt (5), du canal de gaz combustible d'échappement (11) ; et du canal de gaz recyclé (4) et configurée pour s'ouvrir lorsque la pression dans le canal au niveau duquel la vanne de surpression est disposée dépasse une première pression prédéterminée.

3. Système pile à combustible selon la revendication 1, dans lequel la première vanne de mise en marche-arrêt (5) est configurée pour s'ouvrir lorsque la pression dans une partie, prévue en amont de la première vanne de mise en marche-arrêt (5), du canal au niveau duquel la première vanne de mise en marche-arrêt (5) est disposée dépasse la première pression prédéterminée.

4. Système pile à combustible selon la revendication 3, dans lequel la première vanne de mise en marche-arrêt (5) est configurée pour se fermer lorsque la pression dans la partie, prévue en amont de la première vanne de mise en marche-arrêt (5), du canal au niveau duquel la première vanne de mise en marche-arrêt (5) est disposée devient inférieure à une seconde pression prédéterminée non supérieure à la première pression prédéterminée après que la première vanne de mise en marche-arrêt (5) soit ouverte lorsque la pression dans la partie, prévue en amont de la première vanne de mise en marche-arrêt (5), du canal au niveau duquel la première vanne de mise en marche-arrêt est disposée dépasse la première pression prédéterminée.

5. Système pile à combustible selon la revendication 1, comprenant en outre un détecteur de pression (17) configuré pour détecter la pression dans une partie, prévue en amont de la première vanne de mise en marche-arrêt (5), du canal au niveau duquel la première vanne de mise en marche-arrêt (5) est disposée,
le dispositif de commande (7) étant configuré pour ouvrir la première vanne de mise en marche-arrêt (5) lorsque la pression détectée par le détecteur de pression (17) dépasse la première pression prédéterminée.

6. Système pile à combustible selon la revendication 5, le dispositif de commande (7) étant configuré pour fermer la première vanne de mise en marche-arrêt (5) lorsque la pression détectée par le détecteur de pression (17) devient inférieure à la seconde pression prédéterminée non supérieure à la première pression prédéterminée après que la première vanne de mise en marche-arrêt (5) soit ouverte lorsque la pression détectée par le détecteur de pression (17) dépasse la première pression prédéterminée.

7. Système pile à combustible selon l'une quelconque des revendications 1 à 6, le dispositif de commande (7) étant configuré pour fermer la première vanne de mise en marche-arrêt (5) et activer l'unité d'alimentation de matière (3) durant une opération de production d'énergie électrique du système pile à combustible.

8. Système pile à combustible selon l'une quelconque des revendications 1 à 6, le dispositif de commande (7) étant configuré pour fermer la première vanne de mise en marche-arrêt (5) et activer l'unité d'alimentation de matière (3) durant une opération d'arrêt du système pile à combustible.

9. Système pile à combustible selon l'une quelconque des revendications 1 à 8, le dispositif de commande (7) étant configuré pour fermer la première vanne de mise en marche-arrêt (5) et activer l'unité d'alimentation de matière (3) pour chaque durée prédéterminée.

10. Système pile à combustible selon l'une quelconque des revendications 1 à 9, la première vanne de mise en marche-arrêt (5) étant disposée au niveau du canal de gaz combustible d'échappement (11).

11. Système pile à combustible selon l'une quelconque des revendications 1 à 10, comprenant en outre un dispositif d'ajustement d'énergie électrique (16) configuré pour ajuster l'énergie électrique de sortie depuis la pile à combustible (8) :
la première vanne de mise en marche-arrêt (5) étant disposée au niveau du canal de gaz combustible d'échappement (11) ; et
le dispositif de commande (7) étant configuré pour réduire l'énergie électrique de sortie du dispositif d'ajustement d'énergie électrique (16) lorsque la première vanne de mise en marche-arrêt (5) est fermée durant l'opération de production d'énergie électrique du système pile à combustible.

12. Système pile à combustible selon l'une quelconque des revendications 1 à 10, comprenant en outre un dispositif d'ajustement d'énergie électrique (16) configuré pour ajuster l'énergie électrique de sortie provenant de la pile à combustible (8) :
la première vanne de mise en marche-arrêt (5) étant disposée au niveau du canal de gaz combustible d'échappement (11) ; et
le dispositif de commande (7) étant configuré pour augmenter l'énergie électrique de sortie du dispositif d'ajustement d'énergie électrique (16) lorsque la première vanne de mise en marche-arrêt (5) est fermée durant l'opération de production d'énergie électrique du système pile à combustible.

13. Système pile à combustible selon l'une quelconque des revendications 1 à 12, le dispositif de commande (7) étant configuré pour ouvrir la première vanne de mise en marche-arrêt (5) après une première durée prédéterminée à partir de la fermeture de la première vanne de mise en marche-arrêt (5).

14. Système pile à combustible selon l'une quelconque des revendications 1 à 13, le dispositif de commande (7) étant configuré pour répéter, un nombre prédéterminé de fois, la fermeture de la première vanne de mise en marche-arrêt (5) et l'ouverture de la première vanne de mise en marche-arrêt (5) après une seconde durée prédéterminée à partir de la fermeture.

15. Système pile à combustible selon l'une quelconque des revendications 1 à 14, le dispositif de commande (7) étant configuré pour démarrer l'opération d'arrêt du système pile à combustible, puis fermer la première vanne de mise en marche-arrêt (5), et activer l'unité d'alimentation de matière (3) lorsque le détecteur de colmatage (6) détecte le colmatage durant l'opération de production d'énergie électrique du système pile à combustible.

16. Système pile à combustible selon l'une quelconque des revendications 1 à 15, le dispositif de commande (7) étant configuré pour ouvrir la première vanne de mise en marche-arrêt (5) lorsque le détecteur de colmatage (6) ne détecte pas de colmatage après que la première vanne de mise en marche-arrêt (5) soit fermée lorsque le détecteur de colmatage (6) détecte le colmatage.

17. Système pile à combustible selon l'une quelconque des revendications 1 à 16, le dispositif de commande (7) étant configuré pour, lorsque le détecteur de colmatage (6) détecte le colmatage, répéter la fermeture de la première vanne de mise en marche-arrêt (5) et l'ouverture de la première vanne de mise en marche-arrêt (5) après une troisième durée prédéterminée à partir de la fermeture jusqu'à ce que le détecteur de colmatage (6) ne détecte pas de colmatage.

18. Procédé de fonctionnement d'un système pile à combustible,
le système pile à combustible comprenant :
un hydro-désulfuriseur (1) configuré pour entraîner la réaction d'un composé soufré dans un matériau gazeux avec de l'hydrogène pour retirer le composé soufré ;
une unité d'alimentation de matière (3) configurée pour forcer le matériau gazeux à alimenter le matériau gazeux au niveau de l'hydro-désulfuriseur (1) ;
un générateur d'hydrogène (2) configuré pour entraîner une réaction entre le matériau gazeux qui s'est écoulé à travers l'hydro-désulfuriseur (1) et la vapeur pour générer un gaz combustible contenant de l'hydrogène ;
une pile à combustible (8) configurée pour générer de l'énergie électrique en utilisant le gaz combustible évacué du générateur d'hydrogène (2) et un gaz oxydant ;
un canal de gaz combustible (10) à travers lequel le gaz combustible évacué du générateur d'hydrogène (2) est alimenté à la pile à combustible (8) ;
un canal de gaz recyclé (4) qui se ramifie depuis une partie de ramification du canal de gaz combustible (10) et par lequel une partie du gaz combustible évacué du générateur d'hydrogène (2) est mélangée avec le matériau gazeux avant que le matériau gazeux s'écoule dans l'unité d'alimentation de matière (3) ;
un canal de gaz combustible d'échappement (11) à travers lequel un gaz combustible d'échappement contenant de l'hydrogène non consommé par la pile à combustible (8) est évacué de la pile à combustible (8) ;
une première vanne de mise en marche-arrêt (5) disposée au niveau d'au moins l'un du canal de gaz combustible (10) prévue en aval de la partie de ramification et du canal de gaz combustible d'échappement (11) ; et
un détecteur de colmatage (6) configuré pour détecter le colmatage du canal de gaz recyclé (4), le détecteur de colmatage (6) étant sélectionné dans le groupe constitué d'un détecteur de pression, d'un détecteur de température et d'un détecteur de débit d'écoulement, et
le procédé comprenant
la fermeture de la première vanne de mise en marche-arrêt (5) et l'activation de l'unité d'alimentation de matière (3) lorsque le détecteur de colmatage (6) détecte le colmatage.
